# EUROPEAN PATENT APPLICATION

(11) **EP 4 761 065 A1**
(43) Date of publication of application: **17.06.2026**
(21) Application number: 24870301.9
(22) Date of filing: 28.08.2024
(51) Int. Cl.: H02K 1/20, H02K 9/193, H02K 5/20, H02K 7/116, B60K 1/00, B60K 11/02

(54) **MOTOR IN WHICH STATOR DISCHARGES LIQUID FOR WINDING COOLING, POWERTRAIN, AND ELECTRIC VEHICLE**

(30) Priority: 26.09.2023 CN 202311273276
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); WANG, Sixue, Shenzhen, Guangdong 518043 (CN); LIU, Hongbing, Shenzhen, Guangdong 518043 (CN)
(74) Representative: Isarpatent
(86) International application number: PCT/CN2024/115261
(87) International publication number: WO 2025/066755

(57) **Abstract**

This application relates to the field of motor technologies, and provides to a motor with stator liquid-outlet for winding cooling, a powertrain, and an electric vehicle. The motor with stator liquid-outlet for winding cooling includes an axial gap, two end plates, and a plurality of laminations. Along an axial direction of the motor, the plurality of laminations are arranged between the two end plates, one end plate includes a plurality of liquid outlets, the plurality of liquid outlets are spaced apart along a circumferential direction of the motor, and the axial gap is configured to communicate with at least two adjacent liquid outlets. The axial gap includes an axial gap between two laminations, and at least one other lamination is arranged between the two laminations along the axial direction of the motor; or an axial gap between one lamination and the end plate, where the end plate and the lamination are arranged adjacently along the axial direction of the motor. After entering the motor, a cooling medium can flow along the circumferential direction of the motor to optimize heat dissipation effect of the motor.

## Description

### CROSS-REFERENCE TO RELATED APPLICATIONS

This application claims priority to Chinese Patent Application No. 202311273276.2, filed with the China National Intellectual Property Administration on September 26, 2023 and entitled "MOTOR WITH STATOR LIQUID-OUTLET FOR WINDING COOLING, POWERTRAIN, AND ELECTRIC VEHICLE", which is incorporated herein by reference in its entirety.

### TECHNICAL FIELD

This application relates to the field of motor technologies, and in particular, to a motor with stator liquid-outlet for winding cooling, a powertrain, and an electric vehicle.

### BACKGROUND

With development of the science and technology, motors have higher power density and smaller sizes. The higher power density of the motors imposes a higher requirement on heat dissipation of the motors.

During operation of the motor, a heat loss of a stator core is an important heat source of the motor. Oil-cooled heat dissipation can be performed on a stator of the motor through a heat dissipation channel disposed on the stator. At present, a heat dissipation manner of the stator of the motor in a conventional technology is poor, and cooling effect needs to be improved.

### SUMMARY

This application provides a motor with stator liquid-outlet for winding cooling, a powertrain, and an electric vehicle. After entering the motor, a cooling medium can flow along a circumferential direction of the motor, thereby optimizing heat dissipation effect of the motor.

According to a first aspect, a motor with stator liquid-outlet for winding cooling is provided, and the motor may be used in a powertrain of an electric vehicle. The motor includes a stator, and the stator includes an axial gap, two end plates, and a plurality of laminations. The plurality of laminations may be arranged between the two end plates along an axial direction of the motor. One end plate herein includes a plurality of liquid outlets, and the plurality of liquid outlets are spaced apart along a circumferential direction of the motor. An axial gap is configured to communicate with at least two adjacent liquid outlets, so that a cooling medium can flow in the axial gap and be sprayed out through the at least two circumferentially adjacent liquid outlets. The axial gap of the stator includes an axial gap between two laminations, and at least one other lamination is arranged between the two laminations along the axial direction of the motor. Alternatively, the axial gap of the stator includes an axial gap between one lamination and the end plate, and the end plate and the one lamination are adjacently arranged along the axial direction of the motor. In the stator of the motor, the axial gap allows the cooling medium to flow along a circumferential direction of the stator, and the cooling medium is delivered to and sprayed out from the at least two adjacent liquid outlets, thereby facilitating non-uniform oil spraying at an end part of the stator, and improving liquid cooling and heat dissipation effect of the motor.

In a possible implementation, one end plate of the stator is a lamination, and a lamination located at an axial end part of the motor in the plurality of laminations may be considered as the end plate, or the end plate may be considered as one of the plurality of laminations. One of the two laminations is arranged between the end plate and the other of the two laminations. The one lamination includes a plurality of first grooves or a plurality of first penetrating holes, and the plurality of first grooves or the plurality of first penetrating holes are spaced apart along the circumferential direction of the motor. An opening of the first groove is located on an outer circumferential surface of the lamination, so that the first groove may form an outer layer flow channel of the stator for circulation of the cooling medium. The first penetrating hole may form an inner layer flow channel of the stator for circulation of the cooling medium. The other lamination includes a plurality of second penetrating holes, and the plurality of second penetrating holes are spaced apart along the circumferential direction of the motor. The other lamination herein acts as an end plate, and the second penetrating hole is located at an end port of the axial end part of the motor, that is, a liquid outlet.

Specifically, a quantity of first grooves or a quantity of first penetrating holes of the one lamination is greater than a quantity of second penetrating holes of the other lamination.

In a possible implementation, an outer diameter of the at least one other lamination is less than outer diameters of the two laminations. When the at least one other lamination is arranged between the two laminations, the axial gap can be formed between the two laminations.

In a possible implementation, an outer circumferential surface of the at least one other lamination includes a plurality of second grooves, and the plurality of second grooves are spaced apart along the circumferential direction of the motor. When the at least one other lamination and the two laminations are adjacently arranged along the axial direction of the motor, the second groove may communicate with at least one first groove. Along the circumferential direction of the motor, an opening of each second groove is greater than the opening of each first groove, so that the second groove can communicate with the at least one first groove. Along a radial direction of the motor, a depth of each second groove is greater than a depth of each first groove, so that the second groove can accommodate more cooling medium.

Specifically, along the circumferential direction of the motor, a size of the opening of each second groove is greater than a sum of sizes of openings of two or more adjacent first grooves and a spacing between the two or more adjacent first grooves, and the quantity of first grooves of the one lamination is greater than a quantity of second grooves of each of the at least one other lamination.

In a possible implementation, the motor includes a housing, the housing is configured to accommodate a stator core, and an inner wall of the housing includes two radial grooves and a liquid inlet. A bottom of one radial groove communicates with the liquid inlet, and after a cooling medium enters the housing through the liquid inlet, the cooling medium can flow circumferentially along the radial groove. When the housing is sleeved on outer circumferential surfaces of the plurality of laminations, the one radial groove can communicate with the plurality of first grooves of the lamination, to deliver a cooling medium to each first groove to dissipate heat for the outer circumferential surface of the lamination. Along the axial direction of the motor, a length of an opening of the one radial groove is greater than a length of an opening of the other radial groove, and the other radial groove can communicate with the second groove of the lamination to form an axial gap.

Specifically, along the axial direction of the motor, the length of the opening of the other radial groove is less than or equal to a thickness of one lamination, so that an axial width of the axial gap can be limited. The length of the opening of the one radial groove is greater than a thickness of one or more laminations, so that the cooling medium is delivered to each first groove of the lamination as soon as possible.

In a possible implementation, each of the at least one lamination includes a plurality of third penetrating holes, and the plurality of third penetrating holes are spaced apart along the circumferential direction of the motor. Along the circumferential direction of the motor, a diameter of each third penetrating hole is greater than a diameter of each first penetrating hole and a diameter of each second penetrating hole, so that an axial gap can be formed between the two laminations by the third penetrating hole.

Specifically, along the circumferential direction of the motor, the diameter of each third penetrating hole is greater than a sum of diameters of two or more adjacent second penetrating holes and a size of a spacing between the two or more adjacent second penetrating holes, and a quantity of the plurality of third penetrating holes is less than a quantity of the plurality of second penetrating holes.

In a possible implementation, the stator includes an end plate, along the axial direction of the motor, the end plate and the one lamination are adjacently arranged, and the end plate includes two side faces. One side face is away from the one lamination along the axial direction of the motor, and the one side face includes a plurality of liquid outlets. The other side face faces the one lamination along the axial direction of the motor, and the other side face includes at least one circumferential groove. The circumferential groove may form the axial gap.

A depression direction of each circumferential groove is away from the one lamination along the axial direction of the motor, and each circumferential groove is configured to communicate with at least two liquid outlets.

In a possible implementation, along the circumferential direction of the motor, a size of an opening of each circumferential groove is greater than a sum of diameters of two or more adjacent second penetrating holes and a size of a spacing between the two or more adjacent second penetrating holes. Alternatively, along the circumferential direction of the motor, two adjacent circumferential grooves in the at least one circumferential groove communicate with each other.

According to a second aspect, a powertrain is provided. The powertrain includes a reducer or a transmission, and the motor according to any one of the first aspect and the implementations of the first aspect, and a motor shaft of the motor is in transmission connection to an input shaft of the reducer or the transmission. Because the motor has good heat dissipation performance, heat dissipation performance and power performance of the powertrain can be improved.

According to a third aspect, an electric vehicle is provided. In this application, the electric vehicle includes a wheel, a transmission mechanism, and the powertrain according to any one of the second aspect and the implementations of the second aspect. The powertrain drives the wheel through the transmission mechanism. The electric vehicle provided in this application has good heat dissipation performance and power performance.

For technical effects that can be achieved according to the second aspect and the third aspect, refer to the descriptions of the technical effects that can be achieved according to corresponding design schemes in the first aspect. Details are not described herein again in this application.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3 is a diagram of a structure of a stator of a motor according to an embodiment of this application;
FIG. 4a is a diagram of a structure of a stator of a motor according to an embodiment of this application;
FIG. 4b is an exploded view of a stator of a motor according to an embodiment of this application;
FIG. 4c is a diagram of a partial structure of a stator of a motor along an axial direction according to an embodiment of this application;
FIG. 4d is an exploded view of a partial structure of a stator of a motor according to an embodiment of this application;
FIG. 4e is a diagram of a structure of arrangement of a first lamination and a third lamination of a stator of a motor according to an embodiment of this application;
FIG. 4f is a diagram of a structure of arrangement of a second lamination and a third lamination of a stator of a motor according to an embodiment of this application;
FIG. 5 is a cross-sectional diagram of a stator of a motor according to an embodiment of this application;
FIG. 6a is a diagram of a structure of adjacent arrangement of a plurality of first laminations of a stator of a motor according to an embodiment of this application;
FIG. 6b is a cross-sectional diagram of a partial structure of a stator of a motor according to an embodiment of this application;
FIG. 7a is a diagram of a structure of adjacent arrangement of a plurality of first laminations of a stator of a motor according to an embodiment of this application;
FIG. 7b is a cross-sectional diagram of a partial structure of a stator of a motor according to an embodiment of this application;
FIG. 8 is a cross-sectional diagram of a partial structure of a stator of a motor according to an embodiment of this application;
FIG. 9a is an exploded view of a stator of another motor according to an embodiment of this application;
FIG. 9b is an exploded view of a partial structure of a stator of another motor according to an embodiment of this application;
FIG. 9c is a diagram of a structure of arrangement of a first lamination and a third lamination of a stator of another motor according to an embodiment of this application;
FIG. 9d is a diagram of a structure of arrangement of a second lamination and a third lamination of a stator of another motor according to an embodiment of this application;
FIG. 9e is a diagram of a partial structure of a second lamination and a third lamination of a stator of another motor according to an embodiment of this application;
FIG. 10a is a cross-sectional diagram of a partial structure of a stator of another motor according to an embodiment of this application;
FIG. 10b is a diagram of circulation of cooling medium in a stator of another motor according to an embodiment of this application;
FIG. 10c is a diagram of a simulated physical structure of a circulation channel of a cooling medium in a stator of another motor according to an embodiment of this application;
FIG. 11a is an exploded view of a stator of still another motor according to an embodiment of this application;
FIG. 11b is an exploded view of a partial structure of a stator of still another motor according to an embodiment of this application;
FIG. 12a is a diagram of a partial structure of two third laminations of a stator of still another motor according to an embodiment of this application;
FIG. 12b is a diagram of a simulated physical structure of an axial gap formed by two third laminations of a stator of still another motor according to an embodiment of this application;
FIG. 13a is a diagram of a structure of two third laminations and a fourth lamination of a stator of still another motor according to an embodiment of this application;
FIG. 13b is a cross-sectional diagram of two third laminations and a fourth lamination of a stator of still another motor according to an embodiment of this application;
FIG. 13c is an enlarged view of details at C1 in FIG. 13b;
FIG. 14a is a diagram of a structure of a second lamination and a fifth lamination of a stator of still another motor according to an embodiment of this application;
FIG. 14b is an enlarged view of details at C2 in FIG. 14a;
FIG. 14c is a diagram of a structure of a second lamination and two fifth laminations of a stator of still another motor according to an embodiment of this application;
FIG. 14d is a diagram of a circulation channel of a cooling medium in a stator of still another motor according to an embodiment of this application;
FIG. 15a is a diagram of a structure of a second lamination, two fourth laminations, and two fifth laminations of a stator of still another motor according to an embodiment of this application;
FIG. 15b is a cross-sectional diagram of a partial structure of a stator of still another motor according to an embodiment of this application;
FIG. 15c is an enlarged view of details at C3 in FIG. 15b;
FIG. 15d is an enlarged view of details at C4 in FIG. 15b;
FIG. 16a is a cross-sectional diagram of a stator of still another motor according to an embodiment of this application;
FIG. 16b is an enlarged view of details at C5 in FIG. 16a;
FIG. 16c is an enlarged view of details at C6 in FIG. 16a;
FIG. 16d is a diagram of a simulated physical structure of a circulation channel of a cooling medium in a stator of still another motor according to an embodiment of this application;
FIG. 17a is a diagram of a structure of a stator of yet another motor according to an embodiment of this application;
FIG. 17b is a diagram of a partial structure of a stator of yet another motor according to an embodiment of this application;
FIG. 17c is an exploded view of a partial structure of a stator of yet another motor according to an embodiment of this application;
FIG. 18a is a diagram of a structure of an end plate of a stator of yet another motor according to an embodiment of this application;
FIG. 18b is an enlarged view of details at D1 in FIG. 18a;
FIG. 19 is a perspective view of an end plate and a lamination of a stator of yet another motor according to an embodiment of this application;
FIG. 20a is a cross-sectional diagram of a partial structure of a stator of yet another motor according to an embodiment of this application;
FIG. 20b is an enlarged view of details at D2 in FIG. 20a;
FIG. 20c is an enlarged view of details at D3 in FIG. 20a;
FIG. 20d is a diagram of a simulated physical structure of a circulation channel of a cooling medium in a stator of yet another motor according to an embodiment of this application;
FIG. 21a is a diagram of a structure of an end plate of a stator of yet another motor according to an embodiment of this application;
FIG. 21b is a diagram of a partial structure of a stator of yet another motor according to an embodiment of this application; and
FIG. 21c is an enlarged view of details at D4 in FIG. 21b.

Reference numerals:
1000: powertrain; 2000: transmission mechanism; 3000: wheel;
100: motor; 200: reducer;
10: stator; 20: stator winding; 30: rotor; 40: motor shaft; 101: liquid inlet; 102: liquid outlet; 103: stator teeth; 104: stator groove;
1: housing; 11: first radial groove; 12: second radial groove; 13: liquid inlet pipe; 2: lamination; 21: central hole; 22: lamination groove; 23: second penetrating hole; 24: first groove; 25: second groove; 26: first penetrating hole; 27: third groove; 28: protrusion; 29: third penetrating hole; 3: end plate; 31: circumferential depression; 32: circumferential groove; 33: fourth penetrating hole; 34: circumferential boss; 341: first groove portion; 342: second groove portion; 35: flange; 36: bump; 2a: first lamination; 2b: second lamination; 2c: third lamination; 2d: fourth lamination; 2e: fifth lamination.

### DESCRIPTION OF EMBODIMENTS

With development of the science and technology, motors are developing toward small size and high power, and heat dissipation of the motors is one of bottlenecks that limits an increase in power density of the motors. In a high-speed operating state of the motor, a heat loss of a stator core is an important heat source, and the stator core can usually be cooled by using cooling oil. Specifically, oil may be supplied to the back of the stator core, and oil is sprayed onto an end winding of a stator winding, to implement heat dissipation on the stator. However, a current heat dissipation manner has a poor heat dissipation effect, and cannot meet a high heat dissipation requirement brought by an increase in the power density of the motor.

Based on this, embodiments of this application provide a motor with stator liquid-outlet for winding cooling, a powertrain, and an electric vehicle. The motor includes an axial gap, and a cooling medium may flow along a circumferential direction of the motor in the axial gap, thereby improving heat dissipation effect, and further improving power performance and service lives of the motor and the powertrain.

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

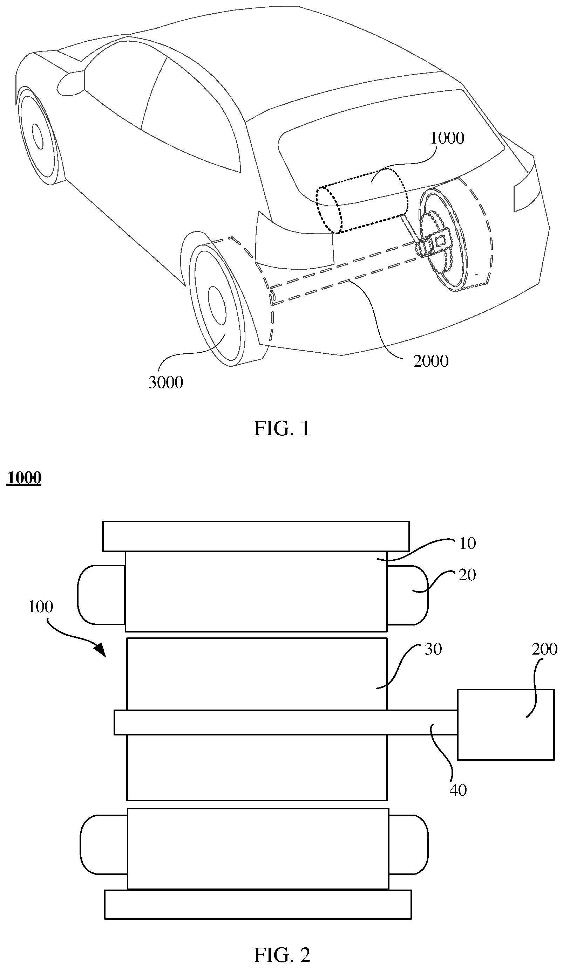

FIG. 1 is a diagram of an electric vehicle according to an embodiment of this application. As shown in FIG. 1, the electric vehicle provided in this embodiment of this application includes a powertrain 1000, a transmission mechanism 2000, and a wheel 3000. The powertrain 1000 drives the wheel 3000 through the transmission mechanism 2000. The powertrain 1000 is configured to convert electric energy into mechanical energy. The transmission mechanism 2000 is configured to be in transmission connection to the powertrain 1000 and the wheel 3000.

FIG. 2 is a diagram of a powertrain according to an embodiment of this application. As shown in FIG. 2, a motor 100 is configured to drive the transmission mechanism 2000 of the electric vehicle by using a reducer 200. The motor 100 includes a stator 10, a stator winding 20, a rotor 30, and a motor shaft 40. The rotor 30 is coaxially fastened to the motor shaft 40, and the motor shaft 40 is in transmission connection to the reducer 200. The stator 10 is sleeved on the rotor 30, and the stator winding 20 is wound around a stator core 10. The stator winding 20 has a part located inside the stator 10 and a part located outside the stator 10. The part that is of the stator winding 20 and that is located outside a stator groove protrudes from a side face of the stator 10 in an axial direction. The stator winding 20 is energized, so that a magnetic field can be generated at a center of the stator 10, and the rotor 30 can rotate in the magnetic field around a shaft axis of the motor shaft 40. The reducer 200 may alternatively be a transmission.

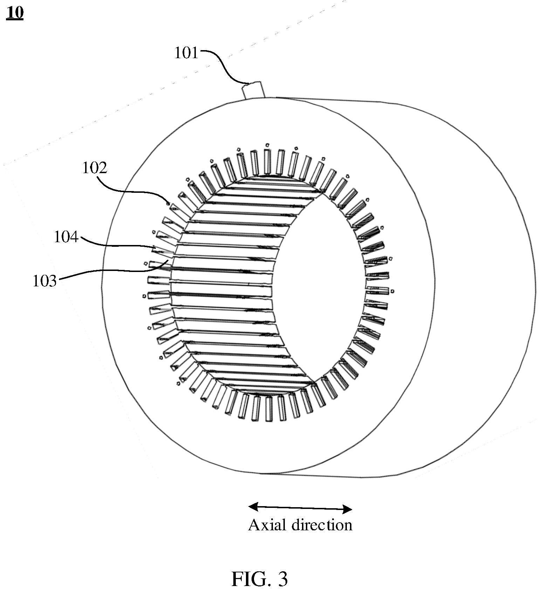

The motor 100 provided in this embodiment of this application is a motor with stator liquid-outlet for winding cooling. Specifically, a cooling medium configured for heat dissipation on the stator 10 may also be sprayed onto an end winding of the stator winding 20 for heat dissipation. As shown in FIG. 3, the stator 10 includes at least one liquid inlet 101. Along an axial direction of the motor 100, an end part of the stator 10 includes a plurality of liquid outlets 102 that communicate with external space. The stator 10 has a channel for circulation of the cooling medium, the liquid inlet 101 communicates with the channel, and the cooling medium is injected into the channel in the stator 10 through the liquid inlet 101. Along the axial direction of the motor 100, the liquid outlet 102 is provided in the end part of the stator 10, and the liquid outlet 102 also communicates with the channel in the stator 10. The entire stator 10 is approximately annular-shaped, and an inner side of the stator 10 has a plurality of stator teeth 103. Along a circumferential direction of the stator 10, the stator groove 104 is formed between any two adjacent stator teeth 103, and the stator winding 20 may be wound around the stator teeth 103. The stator winding 20 is energized, so that a magnetic field can be generated at a center of the stator core 10, and the rotor 30 can rotate in the magnetic field around the shaft axis of the motor shaft 40. Specifically, a part of the stator winding 20 is accommodated in the stator groove 104, and a part of the stator winding 20 protrudes from an axial end face of the stator 10 along the axial direction of the stator 10. When the cooling medium is used for liquid cooling of the stator 10, the cooling medium can be sprayed onto the end winding of the stator winding 20 from the liquid outlet 102, to implement liquid cooling and heat dissipation on the end winding. For example, the plurality of liquid outlets 102 are spaced apart along a circumferential direction of the motor 100. A quantity and an arrangement rule of the liquid outlets 102 may be adjusted according to an actual cooling requirement and a process condition. In FIG. 3, along the circumferential direction of the stator 10, the plurality of liquid outlets 102 are distributed only within a specific angle range. When the cooling medium in the stator 10 is sprayed out through the plurality of liquid outlets 102, liquid cooling and heat dissipation are performed on the end winding within the angle range, so that oil can be sprayed onto a specific part of the end winding.

The stator 10 provided in this embodiment of this application further includes a structure for connecting at least two adjacent liquid outlets 102 along the circumferential direction of the stator 10. The structure is a part of the channel of the stator 10 for circulation of the cooling medium, so that the cooling medium that passes through the at least two liquid outlets 102 can flow along the circumferential direction of the stator 10. In this way, the cooling medium can flow circumferentially to a specified angle that needs to be sprayed, thereby implementing non-uniform oil spraying at the end part of the stator 10, and improving cooling effect on the end winding. There are a plurality of possible implementations of the structure for connecting the at least two adjacent liquid outlets 102, and a specific example is described in the following embodiments.

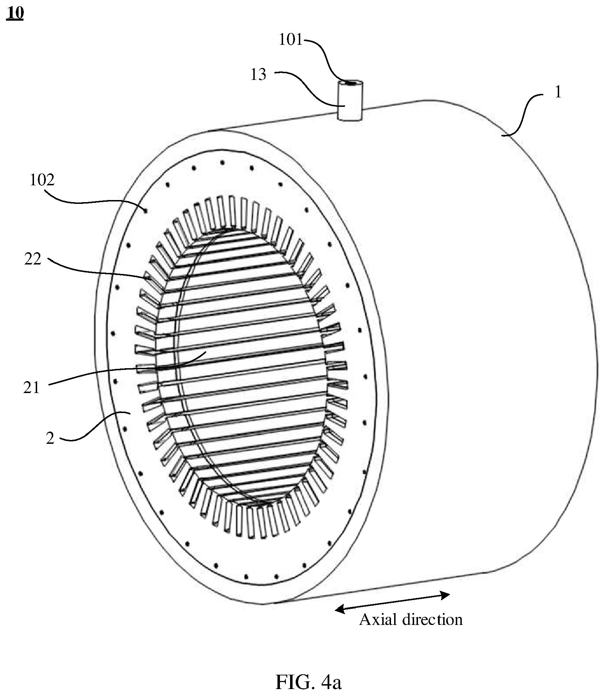

FIG. 4a shows an example of a structure of a stator 10. The stator 10 provided in this embodiment of this application includes a housing 1 and a plurality of laminations 2, and the plurality of laminations 2 are arranged along an axial direction of the stator 10 to form a stator core. The housing 1 includes a liquid inlet pipe 13, and the liquid inlet pipe 13 is a hollow pipe. One end of the liquid inlet pipe 13 is fastened to an outer circumferential surface of the housing 1, and the liquid inlet pipe 13 communicates with a channel in the housing 1 used for circulation of a cooling medium. An end port that is of the liquid inlet pipe 13 and that is away from the outer circumferential surface of the housing 1 forms a liquid inlet 101. The liquid outlet 102 is formed on a lamination 2 located on an axial end face of the stator 10 in the plurality of laminations 2. Herein, the lamination 2 located on the circumferential end face of the stator 10 may be considered as an end plate structure of the stator 10. Each lamination 2 includes a central hole 21 and a plurality of lamination grooves 22, and there are a plurality of lamination grooves 22. The central hole 21 is located at a central position of the lamination 2. Each lamination groove 22 extends along a radial direction of the lamination 2 and communicates with the central hole 21 to form a stator groove 104 in FIG. 3. A bottom of the lamination groove 22 is away from the center of the lamination 2. The plurality of lamination grooves 22 are spaced apart along a circumferential direction of the lamination 2. Along the axial direction of the stator 10, the central hole 21 and each lamination groove 22 extend through the lamination 2. After the plurality of laminations 2 are adjacently arranged along the axial direction of the stator 10, the central holes 21 of the plurality of laminations 2 may communicate with each other to form space for accommodating a rotor 30. The plurality of lamination grooves 22 of the plurality of laminations 2 may communicate with each other to form the stator groove 104 of the stator 10, and structures between any two lamination grooves 22 may be stacked to form a stator tooth 103 of the stator 10.

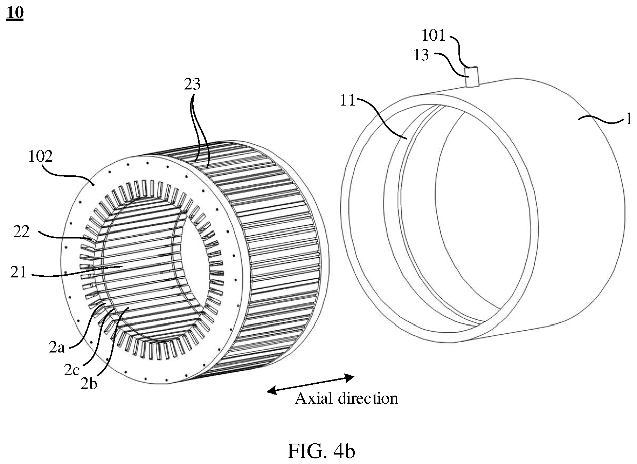

The plurality of laminations 2 of the stator 10 shown in FIG. 4a include two laminations 2 and at least one other lamination 2, and the at least one other lamination 2 is arranged between the two laminations 2. For example, in an exploded view of the stator 10 shown in FIG. 4b, the plurality of laminations 2 include at least one first lamination 2a, at least one second lamination 2b, and at least one third lamination 2c, and the at least one third lamination 2c is arranged between the first lamination 2a and the second lamination 2b. For ease of illustration, one first lamination 2a, one second lamination 2b, and one third lamination 2c are used as an example for description. An end that is of the first lamination 2a and that is away from the second lamination 2b is the axial end face of the stator 10, and the liquid outlet 102 is located on an end face that is of the first lamination 2a and that is away from the second lamination 2b. An outer circumferential surface of the second lamination 2b includes a plurality of first grooves 24, and the first groove 24 extends through the second lamination 2b along the axial direction of the stator 10. The plurality of first grooves 24 are spaced apart along the circumferential direction of the stator 10. The housing 1 is cylinder-shaped, an inner wall of the housing 1 includes a first radial groove 11, and the first radial groove 11 is formed by a groove provided in the inner wall of the housing 1. The first radial groove 11 extends along a circumferential direction of the housing 1, and a bottom of the first radial groove 11 is connected to the liquid inlet 101 through the liquid inlet pipe 13.

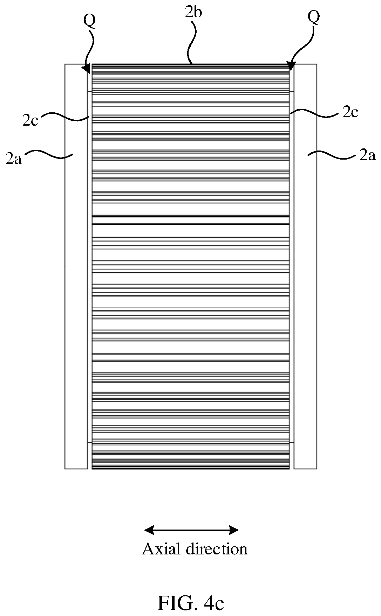

FIG. 4c shows a structure of a plurality of laminations 2 in FIG. 4b that are stacked and observed along a radial direction of the stator 10. As shown in FIG. 4c, the third lamination 2c is arranged between the first lamination 2a and the second lamination 2b. An outer diameter of the third lamination 2c is less than an outer diameter of the first lamination 2a and an outer diameter of the second lamination 2b, and an axial gap Q can be formed between the first lamination 2a and the second lamination 2b. Along the axial direction of the stator 10, at least one first lamination 2a is disposed on each of two ends of the second lamination 2b, and at least one third lamination 2c is disposed between the first lamination 2a and the second lamination 2b, so that the axial gap Q is formed on each of the two ends of the second lamination 2b.

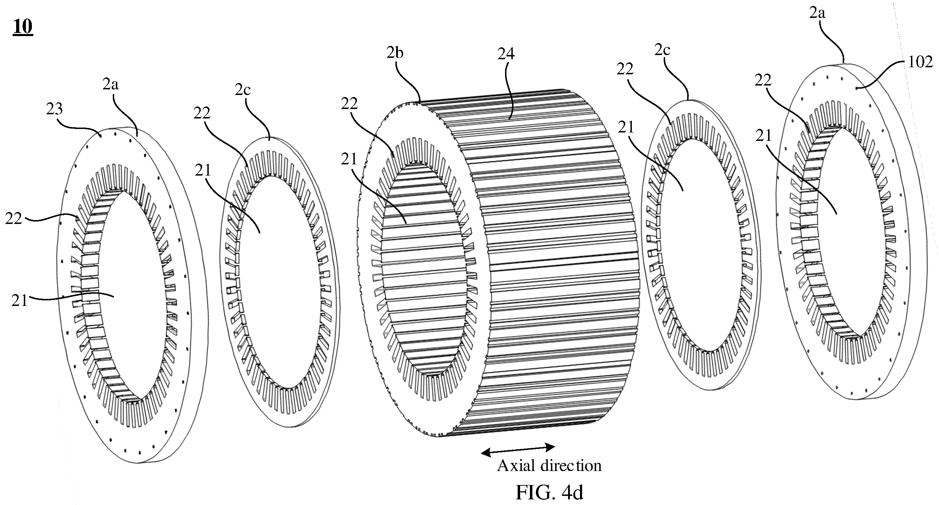

Further, with reference to an exploded view of the plurality of laminations 2 shown in FIG. 4d, the first lamination 2a includes a second penetrating hole 23, and the second penetrating hole 23 extends through the first lamination 2a along the axial direction of the stator 10. A distance between the second penetrating hole 23 and the central hole 21 is less than a distance between an outer circumferential surface of the first lamination 2a and the central hole 21. An end opening on a side that is of the second penetrating hole 23 and that is away from the second lamination 2b is the liquid outlet 102. The outer circumferential surface of the second lamination 2b includes the plurality of first grooves 24, each first groove 24 extends through the second lamination 2b along the axial direction of the stator 10, and the plurality of first grooves 24 are spaced apart along the circumferential direction of the stator 10. The third lamination 2c is disposed between the first lamination 2a and the second lamination 2b. Along the radial direction of the stator 10, a distance between an outer circumferential surface of the third lamination 2c and the central hole 21 is less than the distance between the second penetrating hole 23 in the first lamination 2a and the central hole 21, and the distance between the outer circumferential surface of the third lamination 2c and the central hole 21 is also less than a distance between the first groove 24 in the second lamination 2b and the central hole 21. It may be considered that, along the radial direction of the stator 10, a radial size of the third lamination 2c is less than a radial size of the first lamination 2a and a radial size of the second lamination 2b, so that after the plurality of laminations 2 are arranged along the axial direction of the stator 10, the axial gap Q can be formed between the first lamination 2a and the second lamination 2b.

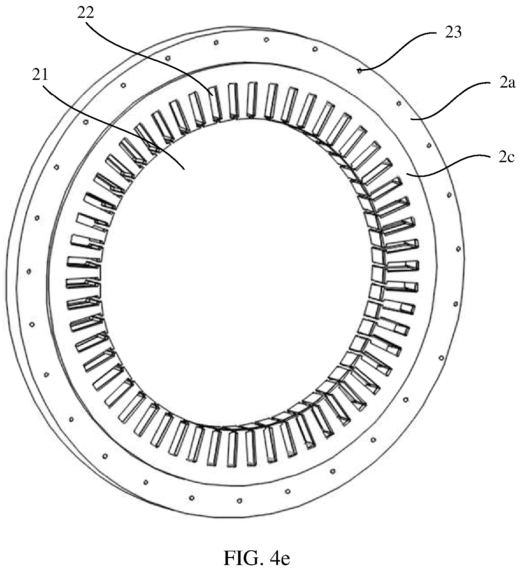

FIG. 4e shows a structure of a third lamination 2c and a first lamination 2a that are arranged in a stacked manner. Along the axial direction of the stator 10, an orthographic projection of the outer circumferential surface of the third lamination 2c onto the first lamination 2a is located between the second penetrating hole 23 of the first lamination 2a and the bottom of the lamination groove 22. Along the radial direction of the stator 10, a side that is of the third lamination 2c and that is away from the central hole 21 is an area in which the axial gap Q is located. Therefore, the axial gap Q can communicate with the second penetrating hole 23 of the first lamination 2a.

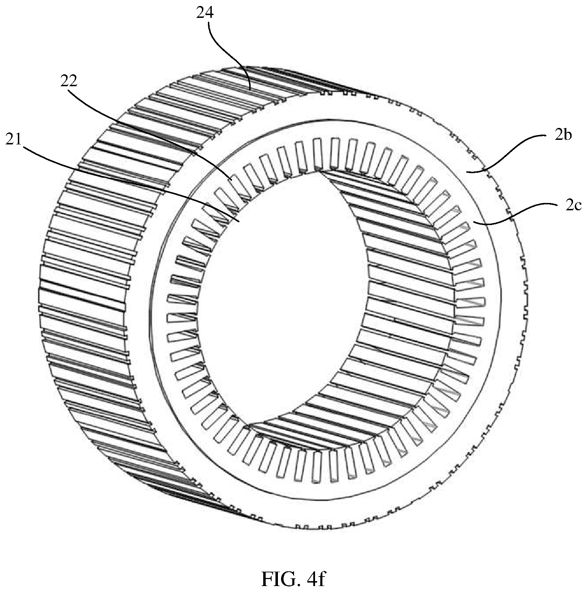

FIG. 4f shows a structure of a third lamination 2c and a second lamination 2b that are arranged in a stacked manner. Along the axial direction of the stator 10, an orthographic projection of the outer circumferential surface of the third lamination 2c onto the second lamination 2b is located between the first groove 24 of the second lamination 2b and the bottom of the lamination groove 22. Along the radial direction of the stator 10, the side that is of the third lamination 2c and that is away from the central hole 21 is the area in which the axial gap Q is located. Therefore, the axial gap Q can communicate with the first groove 24 of the second lamination 2b.

The axial gap Q communicates with at least two adjacent second penetrating holes 23 of the first lamination 2a, and communicates with at least one first groove 24 of the second lamination 2b. It should be understood that, in this example, along the radial direction of the stator 10, the outer circumferential surface of the third lamination 2c is in a circular shape, so that the axial gap Q between the first lamination 2a and the second lamination 2b is in a circular shape, and the axial gap Q extends continuously along the circumferential direction of the stator 10. In this case, the axial gap Q can communicate with each second penetrating hole 23 of the first lamination 2a, and communicate with each first groove 24 of the second lamination 2b.

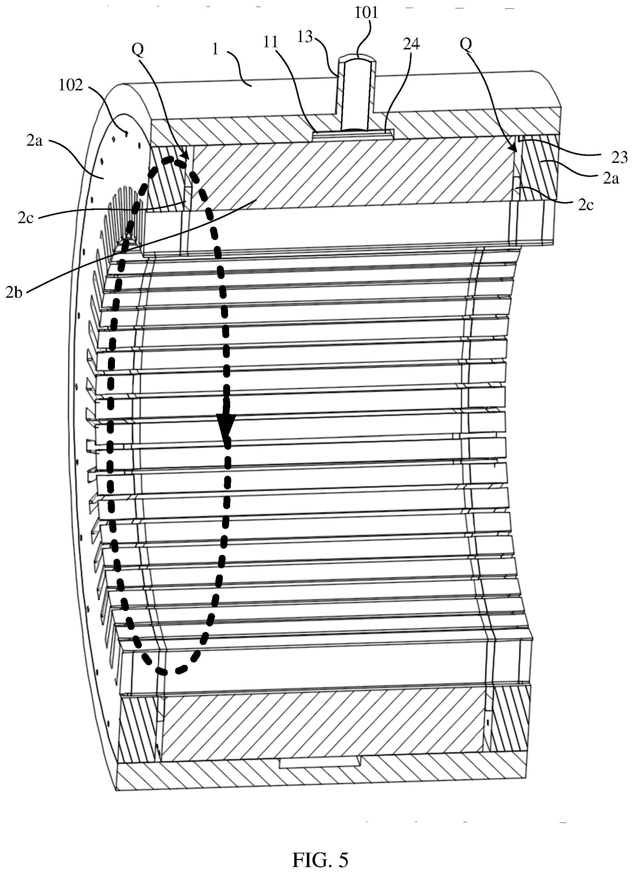

Refer to FIG. 4a to FIG. 4f. FIG. 5 shows a cross-sectional structure in which a housing 1 is coaxially sleeved on a plurality of laminations 2 that form a stator core. The inner wall of the housing 1 is in sealing engagement with the outer circumferential surfaces of the first lamination 2a and the second lamination 2b. A flow channel extending along the axial direction of the stator 10 may be formed between the inner wall of the housing 1 and the first groove 24 of the second lamination 2b, and the flow channel communicates with the first radial groove 11 of the housing 1. A flow channel extending along the circumferential direction of the stator 10 can be formed between the inner wall of the housing 1 and the axial gap Q between the first lamination 2a and the second lamination 2b. In this embodiment of this application, the axial gap Q is annular. For a flow channel path formed by the axial gap Q, refer to a dashed line with an arrow in FIG. 5. The arrow is an example of a flow direction of the cooling medium in the flow channel. Certainly, the direction of the arrow is merely an example for description. The flow channel communicates with at least two adjacent liquid outlets 102 through the second penetrating hole 23 of the first lamination 2a.

In this embodiment of this application, there may be one first lamination 2a. An extension direction of the second penetrating hole 23 is adjusted, to change a flow direction of the cooling medium passing through the second penetrating hole 23, so that the cooling medium can face an end part of a stator winding 20 when the cooling medium is sprayed out through the liquid outlet 102, thereby implementing liquid cooling on the end part of the stator winding 20. Alternatively, there may be a plurality of first laminations 2a. The plurality of first laminations 2a are stacked along the axial direction of the stator 10, and second penetrating holes 23 of the plurality of first laminations 2a communicate with each other to form a channel connecting the liquid outlet 102 and the axial gap Q. A structure and a stacking manner of the first lamination 2a are adjusted, so that a flow direction of the channel may be changed, and further an angle at which the cooling medium is sprayed out through the liquid outlet 102 may be changed.

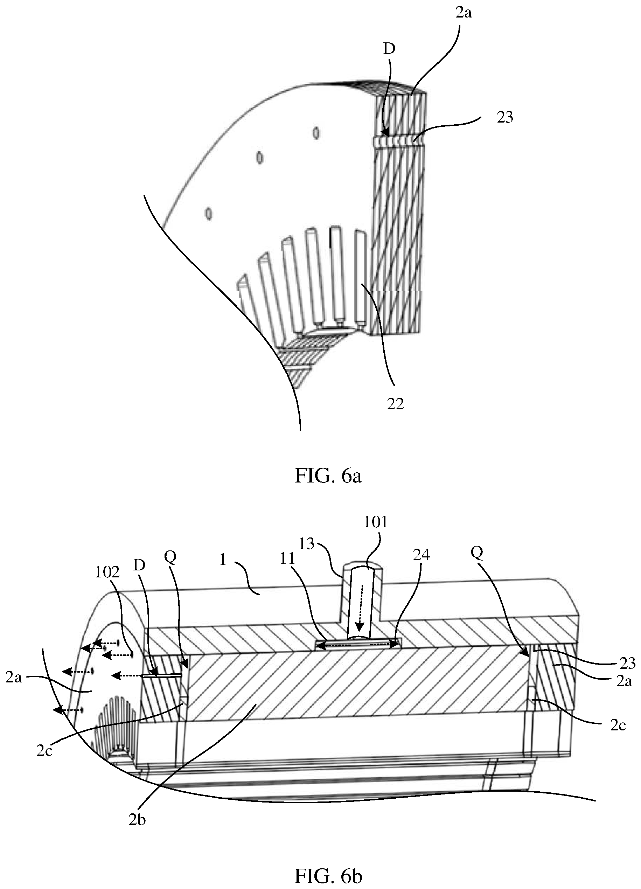

For example, as shown in FIG. 6a, the plurality of first laminations 2a are adjacently arranged along the axial direction of the stator 10, and the plurality of lamination grooves 22 of the first laminations 2a may communicate with each other along the axial direction of the stator 10. The second penetrating holes 23 of the first laminations 2a may communicate with each other along the axial direction of the stator 10 to form a plurality of cooling channels. Along the radial direction of the stator 10, distances between two adjacent communicated second penetrating holes 23 and a center of the first lamination 2a are equal, and the cooling channel formed by connecting the plurality of second penetrating holes 23 is parallel to the axial direction of the stator 10.

FIG. 6b shows a partial structure of a stator 10 having a plurality of first laminations 2a shown in FIG. 6a. For example, a cooling medium is introduced into the liquid inlet 101, and enters the first radial groove 11 of the housing 1, flows in the first radial groove 11 along the circumferential direction of the stator 10, and then enters the first groove 24 in the outer circumferential surface of the second lamination 2b. A part of the cooling medium in each first groove 24 flows to one axial gap Q along the axial direction of the stator 10, and the other part of the cooling medium in each first groove 24 flows oppositely to another axial gap Q along the axial direction of the stator 10. For each axial gap Q, the cooling medium in the axial gap Q flows along the circumferential direction of the stator 10 to a corresponding liquid outlet 102 through the cooling channel D formed by connecting the plurality of second penetrating holes 23 of the plurality of first laminations 2a, and is sprayed out through the corresponding liquid outlet 102. Due to guidance of the cooling channel D, an initial direction in which the cooling medium is sprayed out through the liquid outlet 102 is basically parallel to the axial direction of the stator 10. After the cooling medium is sprayed out through the liquid outlet 102, the cooling medium may drop on the end part of the stator winding 20 under gravity.

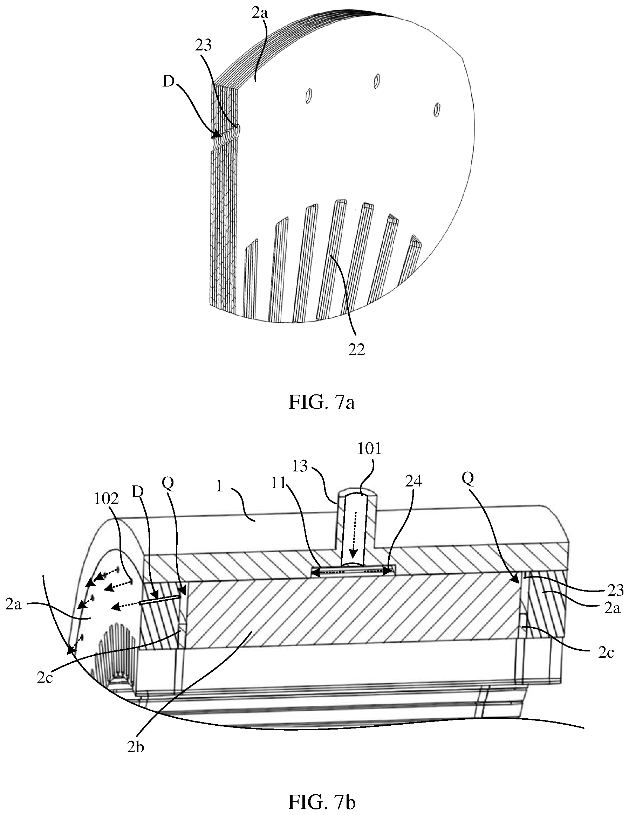

In some other embodiments, as shown in FIG. 7a, the plurality of first laminations 2a are adjacently arranged along the axial direction of the stator 10, and the plurality of lamination grooves 22 of the first laminations 2a may communicate with each other along the axial direction of the stator 10. The second penetrating holes 23 of the first laminations 2a may communicate with each other along the axial direction of the stator 10 to form a plurality of cooling channels D. Along the radial direction of the stator 10, distances between two adjacent communicated second penetrating holes 23 and the center of the first lamination 2a are unequal. With reference to the axial direction of the stator 10, a center of a cooling channel formed by the two second penetrating holes 23 is offset along the radial direction of the stator 10, so that a flow direction of a cooling medium flowing through the cooling channel can be changed. After the plurality of first laminations 2a are arranged according to a specific rule, the plurality of second penetrating holes 23 can sequentially communicate with each other, to form an oblique cooling channel shown in FIG. 7a.

FIG. 7b shows a partial structure of a stator 10 having a plurality of first laminations 2a shown in FIG. 7a. For example, a cooling medium is introduced into the liquid inlet 101, and enters the first radial groove 11 of the housing 1, flows in the first radial groove 11 along the circumferential direction of the stator 10, and then enters the first groove 24 in the outer circumferential surface of the second lamination 2b. A part of the cooling medium in each first groove 24 flows to one axial gap Q along the axial direction of the stator 10, and the other part of the cooling medium in each first groove 24 flows oppositely to another axial gap Q along the axial direction of the stator 10. For each axial gap Q, the cooling medium in the axial gap Q flows along the circumferential direction of the stator 10 to a corresponding liquid outlet 102 through the cooling channel D formed by connecting the plurality of second penetrating holes 23 of the plurality of first laminations 2a, and is sprayed out through the corresponding liquid outlet 102. Due to guidance of the cooling channel D, an initial direction in which the cooling medium is sprayed out through the liquid outlet 102 is basically parallel to the axial direction of the stator 10. After the cooling medium is sprayed out through the liquid outlet 102, the cooling medium may drop on the end part of the stator winding 20 under gravity. There is an included angle between the cooling channel D and the axial direction of the stator 10. Due to the guidance of the cooling channel D, the initial direction in which the cooling medium is sprayed out through the liquid outlet 102 tilts toward the center of the stator 10, so that the cooling medium is sprayed onto the end part of the stator winding 20, thereby implementing liquid cooling and heat dissipation on the end part of the stator winding 20. It should be understood that the two adjacent second penetrating holes 23 that communicate with each other to form one cooling channel D may also be offset along the circumferential direction of the stator 10, so that the cooling channel D is inclined along both the circumferential direction and the axial direction of the stator 10. In this way, the cooling medium can be rotatively sprayed out through the plurality of liquid outlets 102.

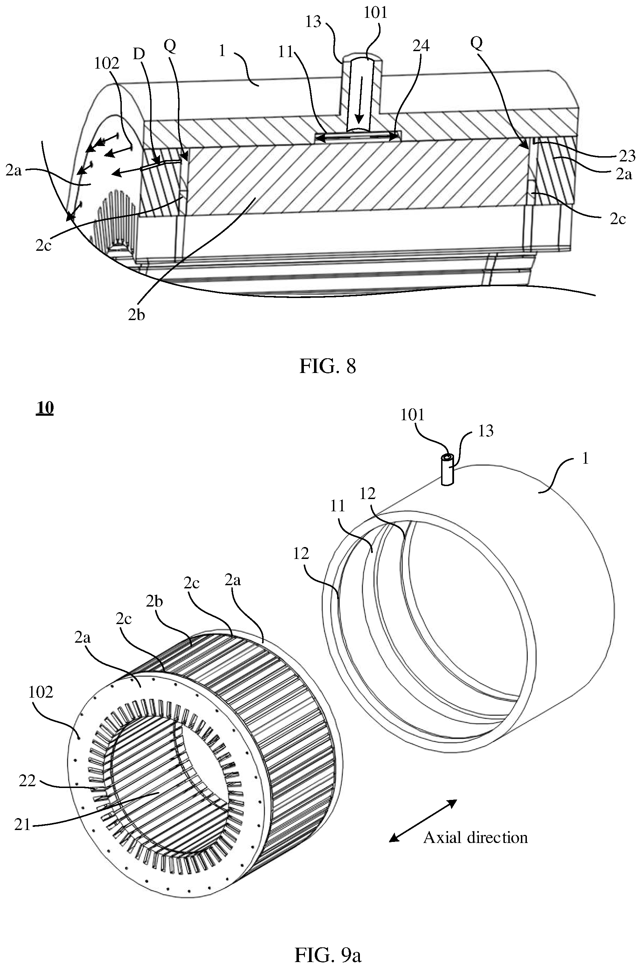

In another embodiment, as shown in FIG. 8, the stator 10 includes the plurality of first laminations 2a, a part of the first laminations 2a is arranged in a structure shown in FIG. 6a, and the other part of the first laminations 2a is arranged in a structure shown in FIG. 7a, to obtain a cooling channel D shown in FIG. 8. For a flow path of a cooling medium, refer to the example structures shown in FIG. 6b and FIG. 7b. Details are not described herein again.

With reference to the structure of the stator 10 shown in FIG. 4a, FIG. 9a shows an exploded structure of another stator 10. The stator 10 provided in this embodiment of this application includes a housing 1 and a plurality of laminations 2, and the plurality of laminations 2 are arranged along an axial direction of the stator 10 to form a stator core. The plurality of laminations 2 include a first lamination 2a, a second lamination 2b, and a third lamination 2c, and at least one third lamination 2c is arranged between the first lamination 2a and the second lamination 2b. An end that is of the first lamination 2a and that is away from the second lamination 2b is an axial end face of the stator 10, and a liquid outlet 102 is located on an end face that is of the first lamination 2a and that is away from the second lamination 2b. An outer circumferential surface of the second lamination 2b includes a plurality of first grooves 24, and the first groove 24 extends through the second lamination 2b along the axial direction of the stator 10. The plurality of first grooves 24 are spaced apart along a circumferential direction of the stator 10. The housing 1 is cylinder-shaped, and an inner wall of the housing 1 includes at least two radial grooves. The two radial grooves include, for example, a first radial groove 11 and a second radial groove 12. The first radial groove 11 is formed by a groove provided in the inner wall of the housing 1, and the first radial groove 11 extends along a circumferential direction of the housing 1 and communicates with a liquid inlet 101 through a liquid inlet pipe 13. Two second radial grooves 12 are provided, and the two second radial grooves 12 are respectively provided on two sides of the first radial groove 11 along the axial direction of the stator 10. Along the axial direction of the stator 10, an opening length of the second radial groove 12 is less than an opening length of the first radial groove 11. Along the axial direction of the stator 10, the opening length of the second radial groove 12 is less than or equal to a thickness of one lamination 2, and the opening length of the first radial groove 11 is greater than a thickness of one or more laminations 2.

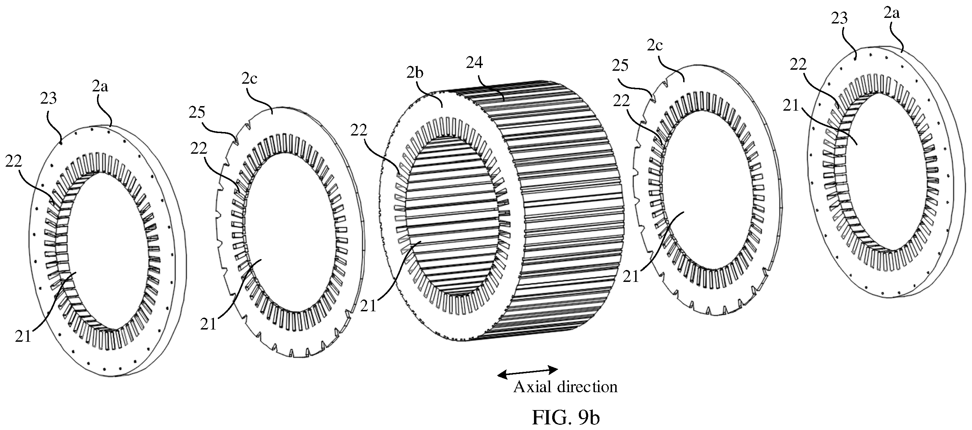

Further, with reference to the exploded view of the plurality of laminations 2 shown in FIG. 9b, the first lamination 2a includes a second penetrating hole 23, and the second penetrating hole 23 extends through the first lamination 2a along the axial direction of the stator 10. A distance between the second penetrating hole 23 and a central hole 21 is less than a distance between an outer circumferential surface of the first lamination 2a and the central hole 21. An end opening on a side that is of the second penetrating hole 23 and that is away from the second lamination 2b is the liquid outlet 102. The outer circumferential surface of the second lamination 2b includes the plurality of first grooves 24, each first groove 24 extends through the second lamination 2b along the axial direction of the stator 10, and the plurality of first grooves 24 are spaced apart along the circumferential direction of the stator 10. The third lamination 2c is arranged between the first lamination 2a and the second lamination 2b, an outer circumferential surface of the third lamination 2c includes a plurality of second grooves 25, and the second grooves 25 are spaced apart along the circumferential direction of the stator 10. A distance between a bottom of the second groove 25 and the central hole 21 of the third lamination 2c is less than a distance between the outer circumferential surface of the third lamination 2c and the central hole 21. The second groove 25 of the third lamination 2c allows an axial gap Q to be formed between the first lamination 2a and the second lamination 2b. When the housing 1 is assembled on outer circumferential surfaces of the plurality of laminations 2, a channel for circulation of a cooling medium may be formed between the second radial groove 12 and the outer circumferential surface of the third lamination 2c.

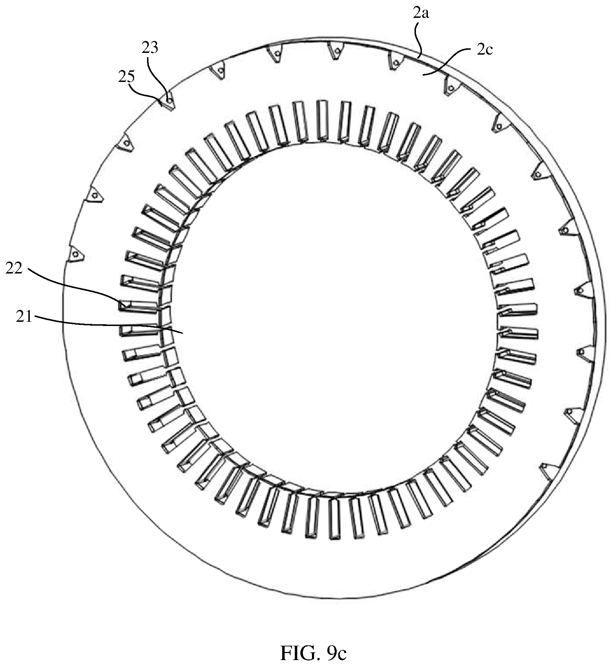

FIG. 9c shows a structure of a third lamination 2c and a first lamination 2a that are arranged in a stacked manner. Along the axial direction of the stator 10, an orthographic projection of the second groove 25 of the third lamination 2c onto the first lamination 2a covers the second penetrating hole 23 of the first lamination 2a. An area in which the second groove 25 of the third lamination 2c is located is an area in which the axial gap Q is located. Therefore, the axial gap Q can communicate with the second penetrating hole 23 of the first lamination 2a.

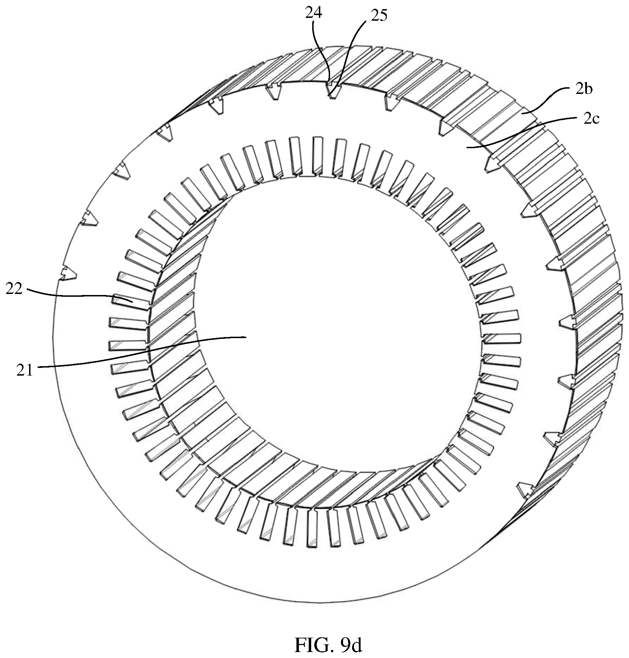

FIG. 9d shows a structure of a third lamination 2c and a second lamination 2b that are arranged in a stacked manner. Along the axial direction of the stator 10, an orthographic projection of the second groove 25 of the third lamination 2c onto the second lamination 2b covers the first groove 24 of the second lamination 2b. An area in which the second groove 25 of the third lamination 2c is located is an area in which the axial gap Q is located. Therefore, the axial gap Q can communicate with the first groove 24 of the second lamination 2b. For example, along the circumferential direction of the stator 10, an opening of each second groove 25 is greater than an opening of each first groove 24, facilitating entry of a cooling medium from the first groove 24 into the second groove 25. Along a radial direction of the stator 10, a depth of each second groove 25 is greater than a depth of each first groove 24, so that the first groove 24 can communicate with the second penetrating hole 23 through the second groove 25.

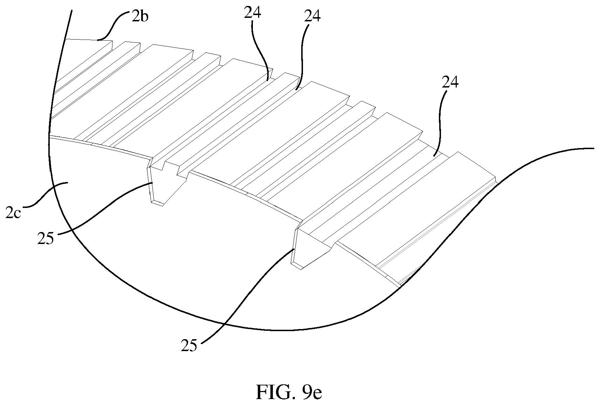

For example, along the circumferential direction of the stator 10, a size of the opening of each second groove 25 is greater than a sum of sizes of openings of two or more adjacent first grooves 24 and a spacing between the two or more adjacent first grooves 24, and a quantity of first grooves 24 of the second lamination 2b is greater than a quantity of second grooves 25 of the third lamination 2c. As an example shown in FIG. 9e, sizes of openings of some second grooves 25 are greater than a sum of sizes of openings of two adjacent first grooves 24 and a spacing between the two adjacent first grooves 24, and a size of an opening of another second groove 25 is almost equal to a size of an opening of one first groove 24.

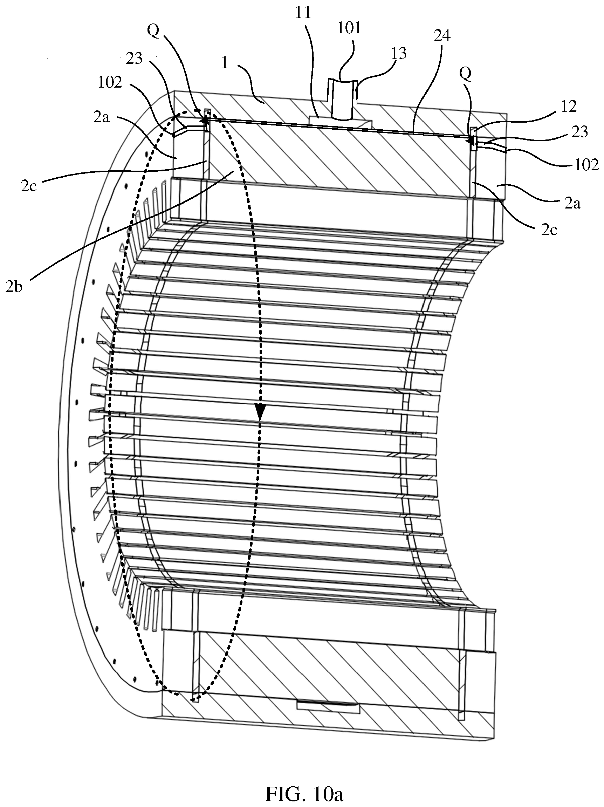

Refer to FIG. 9a to FIG. 9e. FIG. 10a shows a cross-sectional structure in which a housing 1 is coaxially sleeved on a plurality of laminations 2 that form a stator core. The inner wall of the housing 1 is in sealing engagement with outer circumferential surfaces of the first lamination 2a, the second lamination 2b and the third lamination 2c. A flow channel extending along the axial direction of the stator 10 may be formed between the inner wall of the housing 1 and the first groove 24 of the second lamination 2b, and the flow channel communicates with the first radial groove 11 of the housing 1. A flow channel extending along the circumferential direction of the stator 10 may be formed between the second radial groove 12 of the housing 1 and the axial gap Q between the first lamination 2a and the second lamination 2b. For a flow channel path, refer to a dashed line with an arrow in FIG. 10a. The arrow is an example of a flow direction of a cooling medium in the flow channel. Certainly, the direction of the arrow is merely an example for description. The flow channel communicates with at least two adjacent liquid outlets 102 through the second penetrating hole 23 of the first lamination 2a.

In this embodiment of this application, there may be one first lamination 2a. An extension direction of the second penetrating hole 23 is adjusted, to change a flow direction of the cooling medium passing through the second penetrating hole 23, so that the cooling medium can face an end part of a stator winding 20 when the cooling medium is sprayed out through the liquid outlet 102, thereby implementing liquid cooling on the end part of the stator winding 20. Alternatively, there may be a plurality of first laminations 2a. The plurality of first laminations 2a are stacked along the axial direction of the stator 10, and second penetrating holes 23 of the plurality of first laminations 2a communicate with each other to form a channel connecting the liquid outlet 102 and the axial gap Q. A structure and a stacking manner of the first lamination 2a are adjusted, so that a flow direction of the channel may be changed, and further an angle at which the cooling medium is sprayed out through the liquid outlet 102 may be changed. For a structure in which the plurality of first laminations 2a are stacked, refer to FIG. 6a to FIG. 8. Details are not described herein again. For example, the plurality of first laminations 2a in FIG. 10a are arranged in a stacking manner shown in FIG. 8.

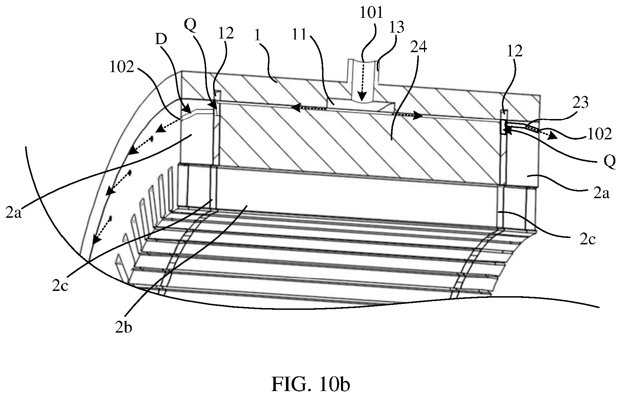

For example, as shown in FIG. 10b, a cooling medium is introduced into the liquid inlet 101, and enters the first radial groove 11 of the housing 1, flows in the first radial groove 11 along the circumferential direction of the stator 10, and then enters the first groove 24 in the outer circumferential surface of the second lamination 2b. A part of the cooling medium in each first groove 24 flows to one second radial groove 12 along the axial direction of the stator 10, and the other part of the cooling medium in each first groove 24 flows oppositely to another second radial groove 12 along the axial direction of the stator 10. The cooling medium in each second radial groove 12 flows along the circumferential direction of the stator 10, and the cooling medium in the second radial groove 12 may enter the axial gap Q between the first lamination 2a and the second lamination 2b. Along the axial direction of the stator 10, the axial gap Q herein coincides with an area in which the second groove 25 of the third lamination 2c is located. The cooling medium in the axial gap Q may flow to a corresponding liquid outlet 102 through a cooling channel D formed by connecting the plurality of second penetrating holes 23 of the plurality of first laminations 2a, and is sprayed out through the corresponding liquid outlet 102. Due to guidance of the cooling channel D, an initial direction in which the cooling medium is sprayed out through the liquid outlet 102 tilts toward a center of the stator 10, so that the cooling medium is sprayed onto the end part of the stator winding 20, thereby implementing liquid cooling and heat dissipation on the end part of the stator winding 20. The axial gap Q allows the cooling medium to flow along the circumferential direction of the stator 10, and the axial gap Q is close to an end part of the stator 10 along the axial direction of the stator 10, so that the cooling medium in the axial gap Q can reach at least two adjacent liquid outlets 102 as soon as possible and be sprayed out through the at least two adjacent liquid outlets 102.

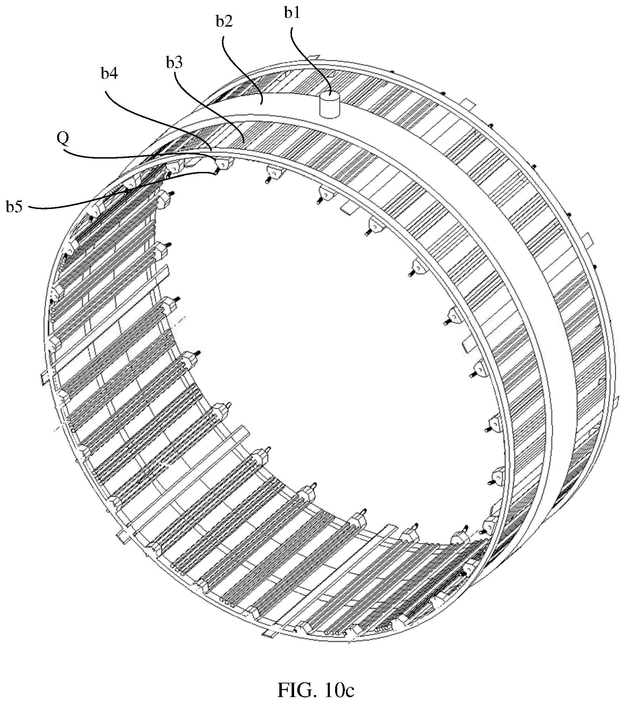

Refer to FIG. 10a and FIG. 10b. FIG. 10c shows an example of a simulated physical structure of a channel formed by the stator 10 for circulation of a cooling medium. As shown in FIG. 10c, a channel b1 is formed by the liquid inlet pipe 13 in the housing 1, and is configured to communicate with the liquid inlet 101 and a circumferential channel 11. A channel b2 is formed by the circumferential channel 11 of the housing 1, is in a ring shape, and is configured to communicate with the liquid inlet pipe 13 and first grooves 24 in outer circumferential surfaces of a plurality of second laminations 2b. A channel b3 is formed by the first grooves 24, there are a plurality of first grooves 24, and the plurality of first grooves 24 are spaced apart along the circumferential direction of the stator 10. A channel b4 is formed by the second radial groove 12 of the housing 1, and the channel b4 communicates with a plurality of channels b3. The axial gap Q is formed by second grooves 25 of two third laminations 2c, and a plurality of axial gaps Q communicate with the channel b4. A channel b5 is formed by the second penetrating hole 23 of the first lamination 2a, and each axial gap Q communicates with, through the channel b4, at least two channels b5 that are adjacent along the circumferential direction of the stator 10. In this embodiment of this application, the axial gap Q communicates with the second radial groove 12 of the housing 1, so that the cooling medium can flow along the circumferential direction of the stator 10 to a plurality of liquid outlets 102. In a specific design, a quantity of liquid outlets 102, and a shape and a distribution of the liquid outlet 102 may be adjusted based on a product requirement, to meet liquid cooling requirements of end windings at different angles and in different directions, so that oil can be sprayed on a specific part of the stator 10.

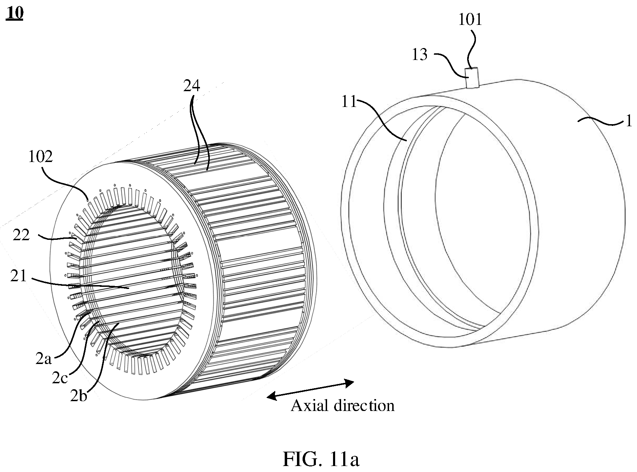

An embodiment of this application further provides a stator 10. As shown in FIG. 11a, the stator 10 includes a housing 1 and a plurality of laminations 2, and the plurality of laminations 2 are arranged along an axial direction of the stator 10 to form a stator core. Each lamination 2 includes a central hole 21 and a plurality of lamination grooves 22, and the plurality of lamination grooves 22 are spaced apart along a circumferential direction of the stator 10 and communicate with the central hole 21. The plurality of laminations 2 include a first lamination 2a, a second lamination 2b, and at least two third laminations 2c, and the at least two third laminations 2c are arranged between the first lamination 2a and the second lamination 2b. An end that is of the first lamination 2a and that is away from the second lamination 2b is an axial end face of the stator 10, and a liquid outlet 102 is located on an end face that is of the first lamination 2a and that is away from the second lamination 2b. An outer circumferential surface of the second lamination 2b includes a plurality of first grooves 24, and the first groove 24 extends through the second lamination 2b along the axial direction of the stator 10. The plurality of first grooves 24 are spaced apart along a circumferential direction of the stator 10. The housing 1 is cylinder-shaped, an inner wall of the housing 1 includes a first radial groove 11, and the first radial groove 11 is formed by a groove provided in the inner wall of the housing 1. The first radial groove 11 extends along a circumferential direction of the housing 1, and a bottom of the first radial groove 11 is connected to the liquid inlet 101 through a liquid inlet pipe 13.

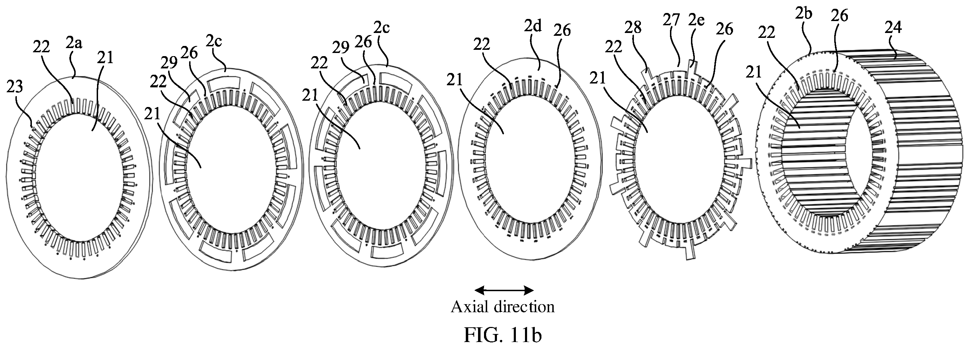

Further, with reference to an exploded view of some of the plurality of laminations 2 in FIG. 11b, the plurality of laminations 2 include the first lamination 2a and the second lamination 2b, and two third laminations 2c, a fourth lamination 2d, and a fifth lamination 2e are further included between the first lamination 2a and the second lamination 2b, the two third laminations 2c, the fourth lamination 2d, and the fifth lamination 2e are adjacently arranged between the first lamination 2a and the second lamination 2b. The two third laminations 2c are close to the first lamination 2a, and the fifth lamination 2e is close to the second lamination 2b. Refer to both FIG. 11a and FIG. 11b. Along the axial direction of the stator 10, the first lamination 2a is arranged at each of two ends of the second lamination 2b, and the fifth lamination 2e, the fourth lamination 2d, and the two third lamination 2c are arranged between any end of the second lamination 2b and the first lamination 2a. FIG. 11b shows only one end of the second lamination 2b, the first lamination 2a, and other laminations 2 between the end of the second lamination 2b and the first lamination 2a.

As shown in FIG. 11b, the first lamination 2a includes a second penetrating hole 23, and the second penetrating hole 23 extends through the first lamination 2a along the axial direction of the stator 10. A distance between the second penetrating hole 23 and the central hole 21 is less than a distance between an outer circumferential surface of the first lamination 2a and the central hole 21. An end opening on a side that is of the second penetrating hole 23 and that is away from the second lamination 2b is the liquid outlet 102. The outer circumferential surface of the second lamination 2b includes the plurality of first grooves 24, and each first groove 24 extends through the second lamination 2b along the axial direction of the stator 10. The plurality of first grooves 24 are spaced apart along the circumferential direction of the stator 10, and each first groove 24 may form at least a part of an axial flow channel in the outer circumferential surface of the second lamination 2b. The second lamination 2b further includes a plurality of first penetrating holes 26, and the plurality of first penetrating holes 26 extend through the second lamination 2b along the axial direction of the stator 10. The plurality of first penetrating holes 26 are spaced apart along the circumferential direction of the stator 10. A cooling medium introduced into the first groove 24 may dissipate heat on the outer circumferential surface of the second lamination 2b, and a cooling medium introduced into the first penetrating hole 26 may dissipate heat inside the second lamination 2b. In other words, the first groove 24 and the first penetrating hole 26 may form, on the second lamination 2b, an internal cooling channel and an external cooling channel that are arranged along a radial direction of the stator 10, thereby improving liquid cooling and heat dissipation effect on the second lamination 2b.

The two third laminations 2c are used as an example herein, and each third lamination 2c includes a plurality of third penetrating holes 29 and a plurality of first penetrating holes 26. Each third penetrating hole 29 and each first penetrating hole 26 extend through the third lamination 2c along the axial direction of the stator 10, the plurality of third penetrating holes 29 are spaced apart along the circumferential direction of the stator 10, and the plurality of first penetrating holes 26 are spaced apart along the circumferential direction of the stator 10. For example, one first penetrating hole 26 is arranged between any two adjacent third penetrating holes 29 along the circumferential direction of the stator 10. Along the circumferential direction of the stator 10, a quantity of third penetrating holes 29 of the third lamination 2c is less than a quantity of first penetrating holes 26 of the second lamination 2b and a quantity of first penetrating holes 26 of the fourth lamination 2d. Along the circumferential direction of the stator 10, a diameter of the third penetrating hole 29 is greater than a size of a structure between any two third penetrating holes 29. A distance between the third penetrating hole 29 and the central hole 21 is less than a distance between an outer circumferential surface of the third lamination 2c and the central hole 21.

The fourth lamination 2d includes a plurality of first penetrating holes 26, the plurality of first penetrating holes 26 are spaced apart along the circumferential direction of the stator 10, and each first penetrating hole 26 extends through the third lamination 2c along the axial direction of the stator 10. Along the radial direction of the stator 10, an outer diameter of the fifth lamination 2e is less than an outer diameter of the fourth lamination 2d and an outer diameter of the second lamination 2b. The fifth lamination 2e includes a plurality of first penetrating holes 26, a plurality of third grooves 27, and a plurality of protrusions 28. The plurality of first penetrating holes 26 are spaced apart along the circumferential direction of the stator 10 and extend through the fifth lamination 2e along the axial direction of the stator 10. The plurality of third grooves 27 are spaced apart along the circumferential direction of the stator 10, and an outer circumferential surface of the fifth lamination 2e is connected to the first penetrating hole 26 through the third groove 27.

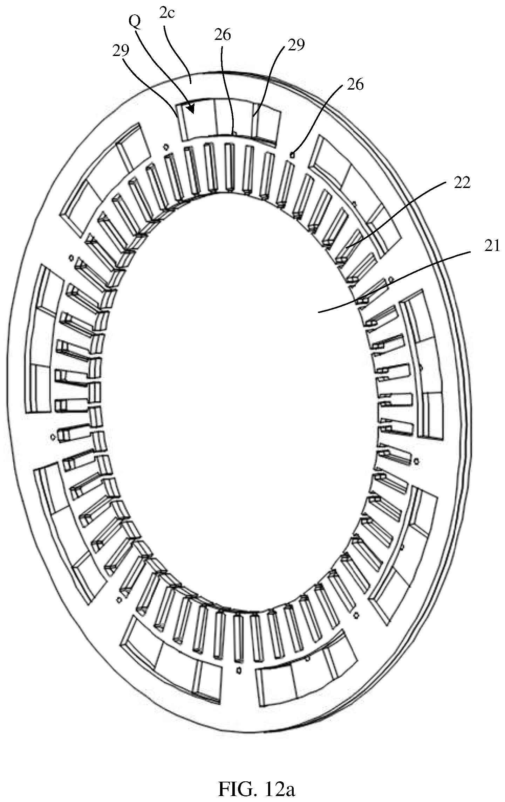

FIG. 12a shows a structure in which two third laminations 2c are arranged along an axial direction of the stator 10. As shown in FIG. 12a, the two third laminations 2c are offset by a specific angle relative to the circumferential direction of the stator 10, so that a plurality of third penetrating holes 29 of the two third laminations 2c are distributed in a staggered manner along the circumferential direction of the stator 10. For example, along the axial direction of the stator 10, each third penetrating hole 29 of one third lamination 2c communicates with two adjacent third penetrating holes 29 of the other third lamination 2c. After the third penetrating holes 29 of the two third laminations 2c communicate with each other, an axial gap Q can be formed between the first lamination 2a and the fourth lamination 2d.

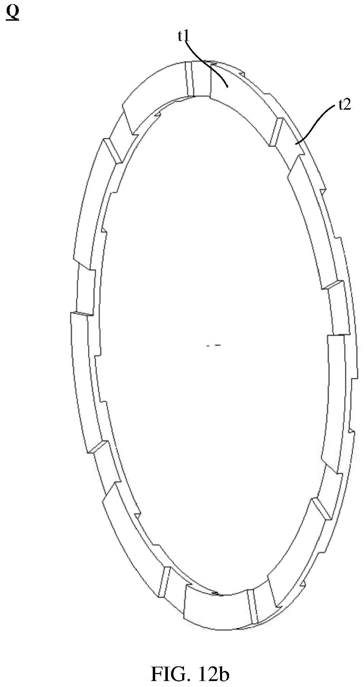

Refer to FIG. 12a. FIG. 12b shows an example of a simulated physical structure of an axial gap Q formed by two third laminations 2c. As shown in FIG. 12b, the axial gap Q is annular and extends along the circumferential direction of the stator 10. A first gap t1 of the axial gap Q is space corresponding to a third penetrating hole 29 of one third lamination 2c, and a second gap t2 is space corresponding to a third penetrating hole 29 of the other third lamination 2c. Any one first gap t1 and one second gap t2 communicate with each other along the axial direction of the stator 10, and a plurality of first gaps t1 and a plurality of second gaps t2 alternately communicate with each other along the circumferential direction of the stator 10 to form the axial gap Q. The axial gap Q is formed between the first lamination 2a and the second lamination 2b, and is specifically located between the first lamination 2a and the fourth lamination 2d.

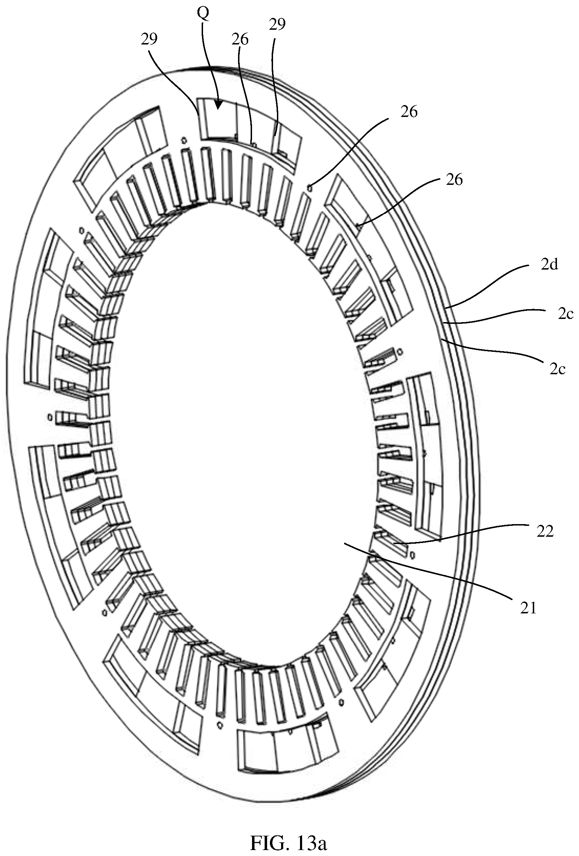

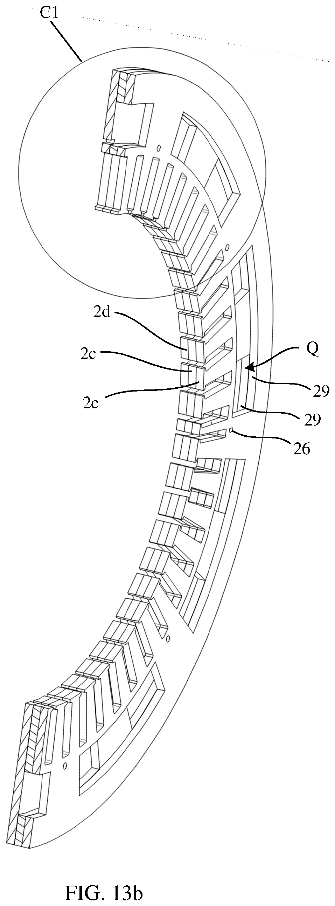

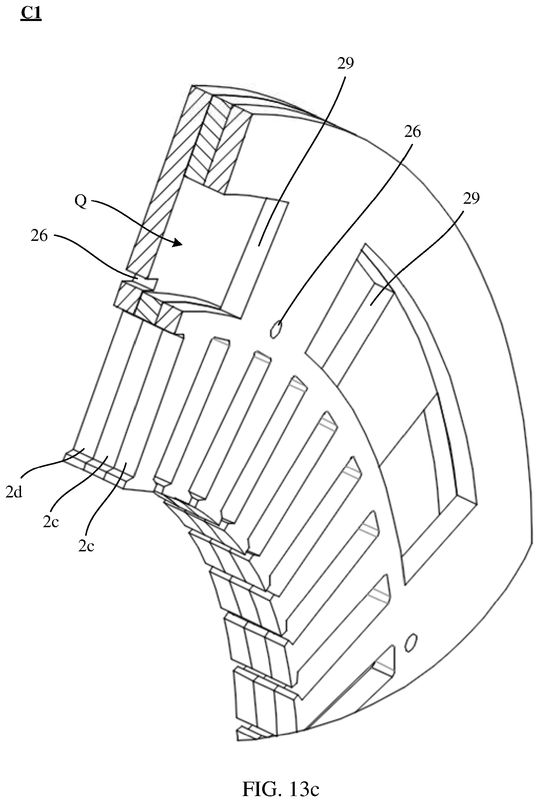

FIG. 13a shows a structure in which two third laminations 2c and a fourth lamination 2d are arranged along an axial direction of a stator 10. FIG. 13b shows a cross-sectional structure of two third laminations 2c and a fourth lamination 2d. FIG. 13c shows an enlarged view of C1 in FIG. 13b. Refer to FIG. 13a to FIG. 13c. The first penetrating hole 26 of the fourth lamination 2d communicates with the first penetrating hole 26 of the third lamination 2c, or the first penetrating hole 26 of the fourth lamination 2d communicates with an axial gap Q formed by third penetrating holes 29 of the two third laminations 2c.

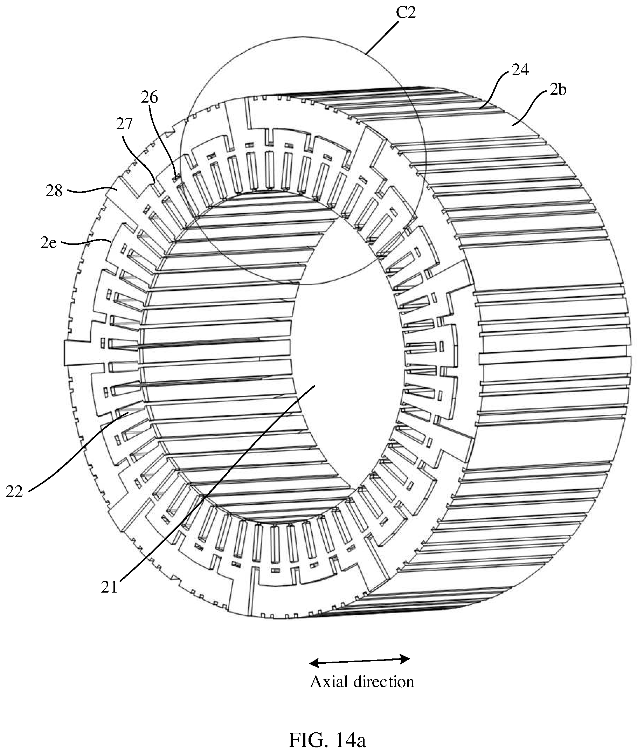

FIG. 14a shows a structure in which a fifth lamination 2e and a second lamination 2b are adjacently arranged. As shown in FIG. 14a, along the radial direction of the stator 10, the outer diameter of the fifth lamination 2e is less than the outer diameter of the second lamination 2b, and an end that is of the protrusion 28 of the fifth lamination 2e and that is away from the central hole 21 is basically aligned with the outer diameter of the second lamination 2b. Notch space is formed between any two protrusions 28 adjacent to each other along the circumferential direction of the stator 10, and along the axial direction of the stator 10, notch space between two protrusions 28 of the fifth lamination 2e that are circumferentially adjacent to each other corresponds to the first groove 24 in the outer circumferential surface of the second lamination 2b. Along the circumferential direction of the stator 10, a size of an area between any two protrusions 28 adjacent to each other along the circumferential direction of the stator 10 is greater than a sum of sizes of the plurality of first grooves 24 and a size of a spacing between any two first grooves 24. Along the axial direction of the stator 10, orthographic projections of at least two first grooves 24 in the second lamination 2b onto the fifth lamination 2e fall between two circumferentially adjacent protrusions 28.

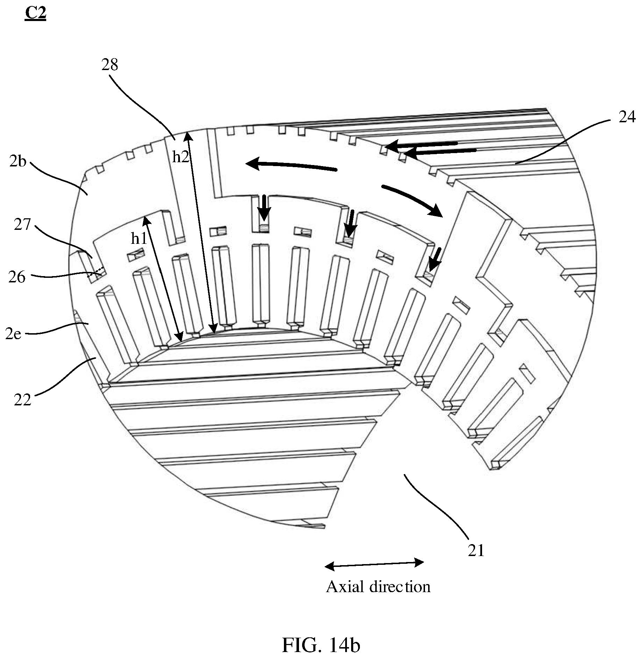

Further, refer to an enlarged view of C2 in FIG. 14a shown in FIG. 14b. The fifth lamination 2e and the second lamination 2b are adjacently arranged along the axial direction of the stator 10. A plurality of first penetrating holes 26 of the fifth lamination 2e respectively communicate with a plurality of first penetrating holes 26 of the second lamination 2b, to form a liquid cooling channel in an inner layer of the stator 10. A distance h1 from the outer circumferential surface of the fifth lamination 2e to the central hole 21 is less than a distance h2 from the outer circumferential surface of the second lamination 2b to the central hole 21. The notch space between the protrusions 28 of the fifth lamination 2e that are circumferentially adjacent to each other communicates with the first groove 24 of the second lamination 2b. The first groove 24 of the second lamination 2b is a part of a liquid cooling channel in an outer layer of the stator 10. The first groove 24 may communicate with the first penetrating hole 26 through the notch space between the protrusions 28 that are circumferentially adjacent to each other, and the third groove 27, so that the inner and outer layer liquid cooling channels of the stator 10 can communicate with each other. As shown in FIG. 14b, a cooling medium in the first groove 24 flows into space between two adjacent protrusions 28 along the axial direction of the stator 10, and then flows along the circumferential direction of the stator 10, and then flows into the first penetrating hole 26 through the third groove 27.

It should be understood that, the third groove 27 of the fifth lamination 2e may be a groove through which the outer circumferential surface of the fifth lamination 2e is connected to the first penetrating hole 26 shown in FIG. 14b, and a dashed line is used as an example between the third groove 27 and the first penetrating hole 26. Alternatively, the third groove 27 of the fifth lamination 2e and a first penetrating hole 26 that corresponds to the third groove 27 along the radial direction of the stator 10 are of an integrated structure. That is, the third groove 27 of the fifth lamination 2e communicates with the first penetrating hole 26 of the second lamination 2b along the axial direction of the stator 10.

In an example in FIG. 14b, along the circumferential direction of the stator 10, the first penetrating hole 26 communicating with the third groove 27 and the first penetrating hole 26 not communicating with the third groove 27 are alternately arranged. In other words, in any two first penetrating holes 26 adjacent to each other along the circumferential direction of the stator 10, one penetrating hole 26 can communicate with the first groove 24, and the other first penetrating hole 26 cannot communicate with the first groove 24.

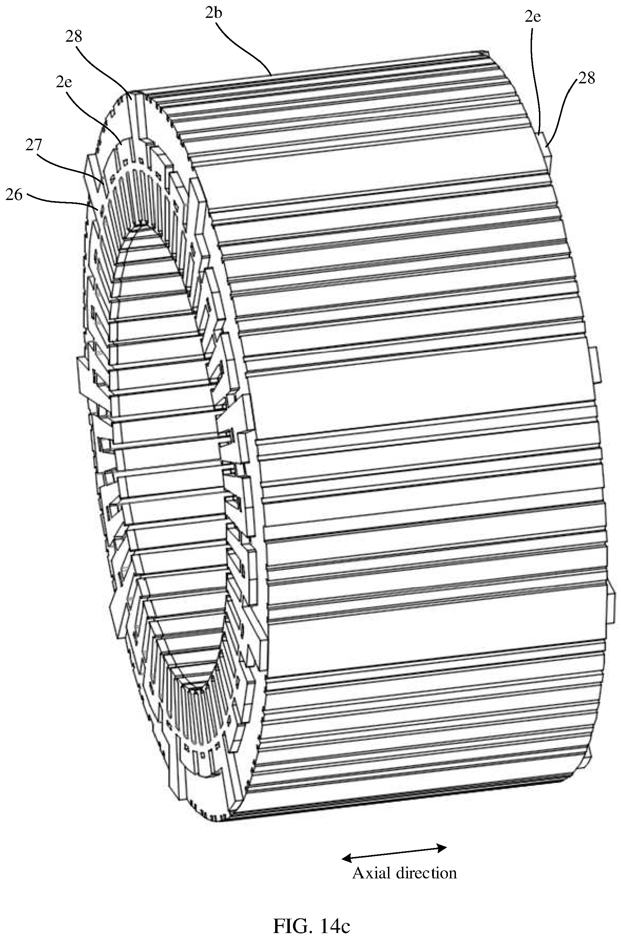

FIG. 14c shows a structure of a second lamination 2b and two fifth laminations 2e. The two fifth laminations 2e are respectively arranged at two ends of the second lamination 2b along the axial direction of the stator 10. Along the axial direction of the stator 10, a plurality of protrusions 28 of the two fifth laminations 2e correspond to each other, and orthographic projections of a plurality of protrusions 28 of one fifth lamination 2e onto the other fifth lamination 2e coincide with a plurality of protrusions 28 on the other fifth lamination 2e. A cooling medium in the first groove 24 of the second lamination 2b may flow to the two fifth laminations 2e at the two ends of the second lamination 2b along the axial direction of the stator 10, and enter the first penetrating hole 26 through the third groove 27 in the fifth lamination 2e.

Refer to both FIG. 14b and FIG. 14c. Some of the first penetrating holes 26 may communicate with the first groove 24 of the second lamination 2b through the third groove 27, and some of the first penetrating holes 26 are not in communication with the first groove 24. When the second lamination 2b and the two fifth laminations 2e are arranged, the two fifth laminations 2e may be rotated by a specific angle relative to the circumferential direction of the stator 10, so that some of the first penetrating holes 26 of the second lamination 2b communicate with some of the first grooves 24 through third grooves 27 of one fifth laminations 2e, and some other first penetrating holes 26 of the second lamination 2b communicate with some other first grooves 24 through third grooves 27 of the other fifth lamination 2e.

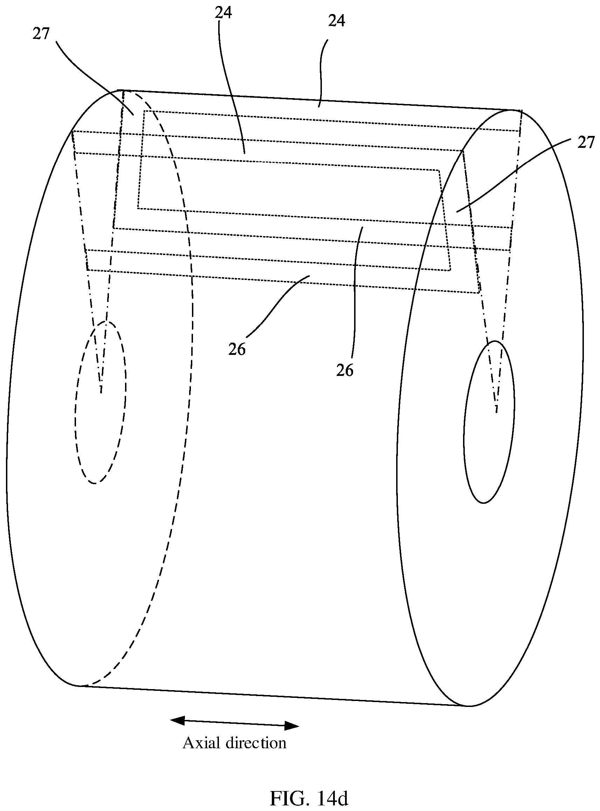

FIG. 14d simply shows an example of at least two channels for circulation of a cooling medium that are formed by two fifth laminations 2e arranged in a staggered manner along a circumferential direction of a stator 10. Specifically, along the circumferential direction of the stator 10, in two adjacent first penetrating holes 26 of a same fifth lamination 2e, one penetrating hole 26 communicates with the first groove 24 through the third groove 27, and the other first penetrating hole 26 does not communicate with the first groove 24 through the third groove 27. Along the axial direction of the stator 10, one end of a same first groove 24 is connected to the first penetrating hole 26 through a third groove 27 of one fifth lamination 2e, and the other end of the first groove 24 is not connected to a first penetrating hole 26 of the other fifth lamination 2e, thereby forming a U-shaped circulation channel in FIG. 14d. Along the circumferential direction of the stator 10, U-shaped circulation channels corresponding to any two adjacent first penetrating holes 26 face away from each other along the axial direction of the stator 10.

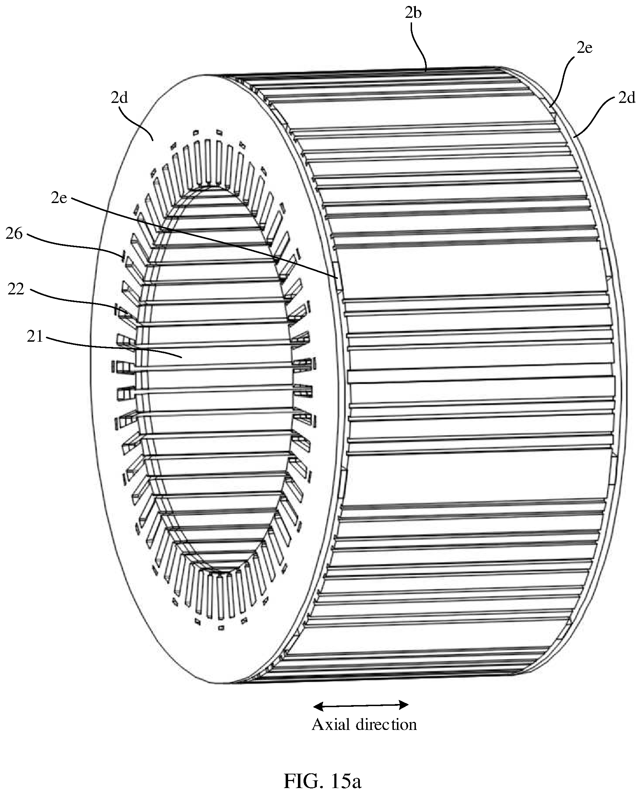

FIG. 15a shows a structure of a second lamination 2b, two fifth laminations 2e, and two fourth laminations 2d. One fifth lamination 2e and one fourth lamination 2d are sequentially arranged at an end part of the second lamination 2b along the axial direction of the stator 10, and the fifth lamination 2e is arranged between the second lamination 2b and the fourth lamination 2d. A quantity of first penetrating holes 26 of the fourth lamination 2d is less than a quantity of first penetrating holes 26 of the fifth lamination 2e. During arrangement, an angle of the fourth lamination 2d relative to the fifth lamination 2e may be adjusted, so that some first penetrating holes 26 of the fourth lamination 2d communicate with first penetrating holes 26 that are of the fifth lamination 2e and that communicate with the third groove 27, and some other first penetrating holes 26 of the fourth lamination 2d communicate with independent first penetrating holes 26 that are of the fifth lamination 2e and that are isolated from the third groove 27.

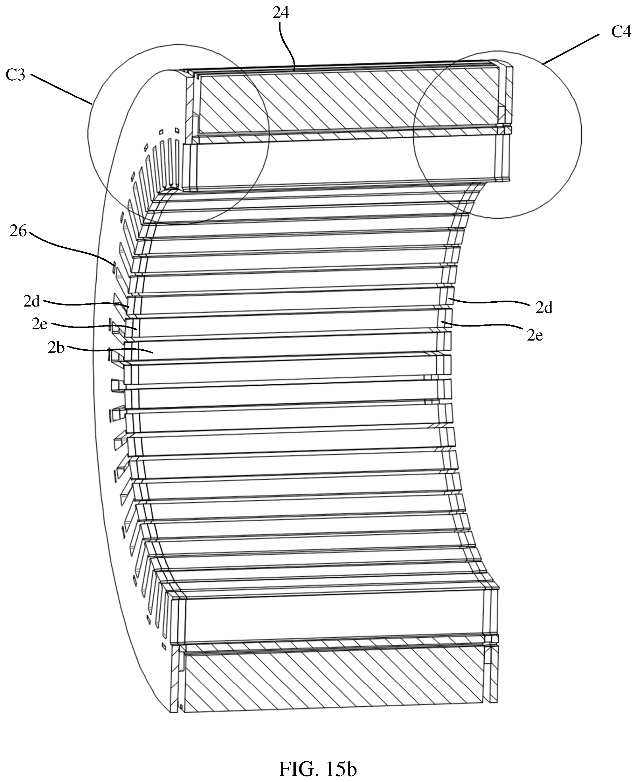

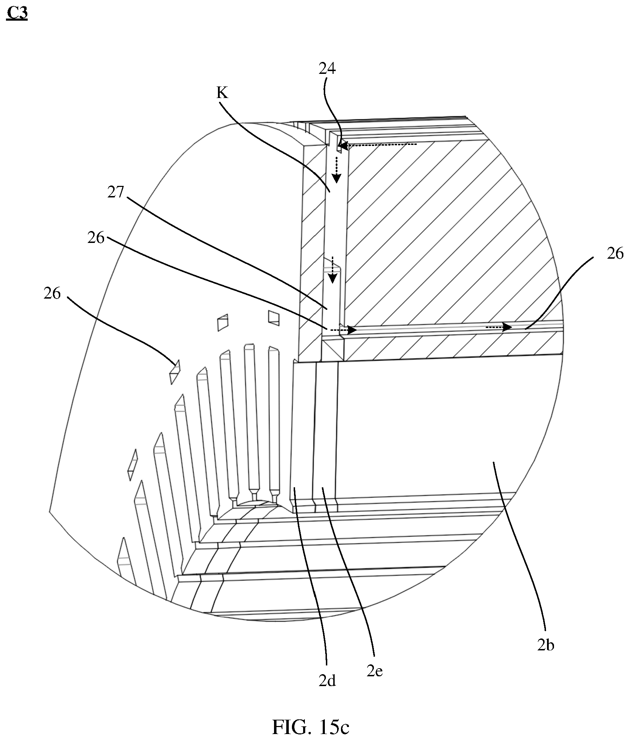

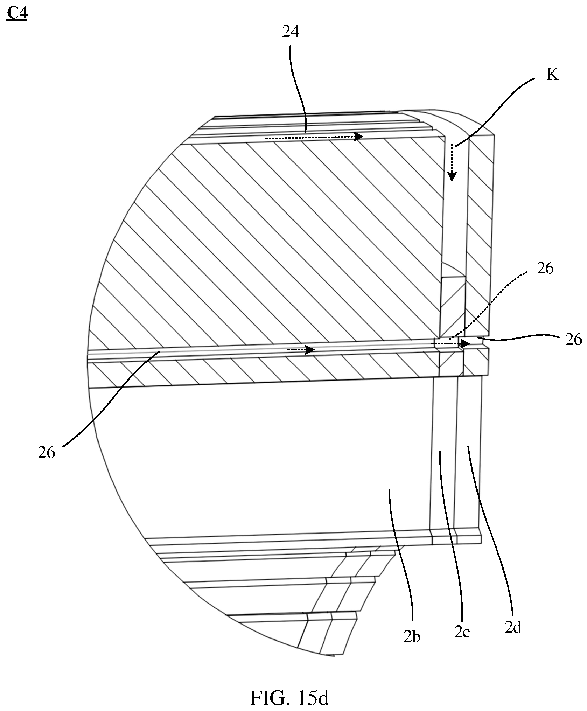

FIG. 15b shows an example of a cross-sectional structure of the structure shown in FIG. 15a. Along the radial direction of the stator 10, one first groove 24 and one first penetrating hole 26 of the second lamination 2b are used as an example. FIG. 15c shows an example of an enlarged view of details at C3 in FIG. 15b. FIG. 15d shows an example of an enlarged view of details at C4 in FIG. 15b.

Refer to both FIG. 15b and FIG. 15c. The second lamination 2b, the fifth lamination 2e, and the fourth lamination 2d at C3 in FIG. 15b are adjacently arranged along the axial direction of the stator 10. The fourth lamination 2d and the second lamination 2b are opposite to each other along the axial direction of the stator 10. Space K in communication with the first groove 24 is formed by an outer circumferential surface of the fifth lamination 2e, a side face that is of the fourth lamination 2d and that faces the fifth lamination 2e, and a side face that is of the second lamination 2b and that faces the fourth lamination 2d. The space K is the space between the two protrusions 28 of the fifth lamination 2e that are circumferentially adjacent to each other. The first penetrating hole 26 of the fifth lamination 2e communicates with the first penetrating hole 26 of the second lamination 2b along the axial direction of the stator 10, and the space K can communicate with the first penetrating hole 26 of the fifth lamination 2e through the third groove 27 of the fifth lamination 2e, so that the first groove 24 of the second lamination 2b communicates with the first penetrating hole 26 through the fifth lamination 2e. The fourth lamination 2d seals the third groove 27 and the first penetrating hole 26 of the fifth lamination 2e along the axial direction of the stator 10. As shown by an arrow in FIG. 15c, after a cooling medium is injected into the first groove 24, the cooling medium flows along the axial direction of the stator 10 to the space K between the second lamination 2b and the fourth lamination 2d, and then flows along the circumferential direction of the stator 10. The cooling medium in the space K enters the first penetrating hole 26 of the second lamination 2b through the third groove 27 and the first penetrating hole 26 of the fifth lamination 2e, so that the first groove 24 of the second lamination 2b communicates with the first penetrating hole 26.

Refer to both FIG. 15b and FIG. 15d. The second lamination 2b, the fifth lamination 2e, and the fourth lamination 2d at C4 in FIG. 15b are adjacently arranged along the axial direction of the stator 10. The fourth lamination 2d and the second lamination 2b are opposite to each other along the axial direction of the stator 10. Space K in communication with the first groove 24 is formed by an outer circumferential surface of the fifth lamination 2e, a side face that is of the fourth lamination 2d and that faces the fifth lamination 2e, and a side face that is of the second lamination 2b and that faces the fourth lamination 2d. The space K is the space between the two protrusions 28 of the fifth lamination 2e that are circumferentially adjacent to each other. The first penetrating hole of the fourth lamination 2d, the first penetrating hole 26 of the fifth lamination 2e, and the first penetrating hole 26 of the second lamination 2b sequentially communicate with each other along the axial direction of the stator 10. As shown by an arrow in FIG. 15d, after a cooling medium is injected into the first groove 24, the cooling medium flows along the axial direction of the stator 10 to the space K between the second lamination 2b and the fourth lamination 2d, and then flows along the circumferential direction of the stator 10. The cooling medium in the first penetrating hole 26 of the second lamination 2b flows out along the axial direction of the stator 10 through the first penetrating hole 26 of the fifth lamination 2e and the first penetrating hole 26 of the fourth lamination 2d.

It should be understood that a circulation manner of the cooling medium shown in FIG. 15c is equivalent to that on a side that is of a U-shaped circulation channel and on which a third groove 27 is provided in FIG. 14d. A circulation manner of the cooling medium shown in FIG. 15d is equivalent to a side that is of a U-shaped circulation channel and at which no third groove 27 is provided in FIG. 14d.

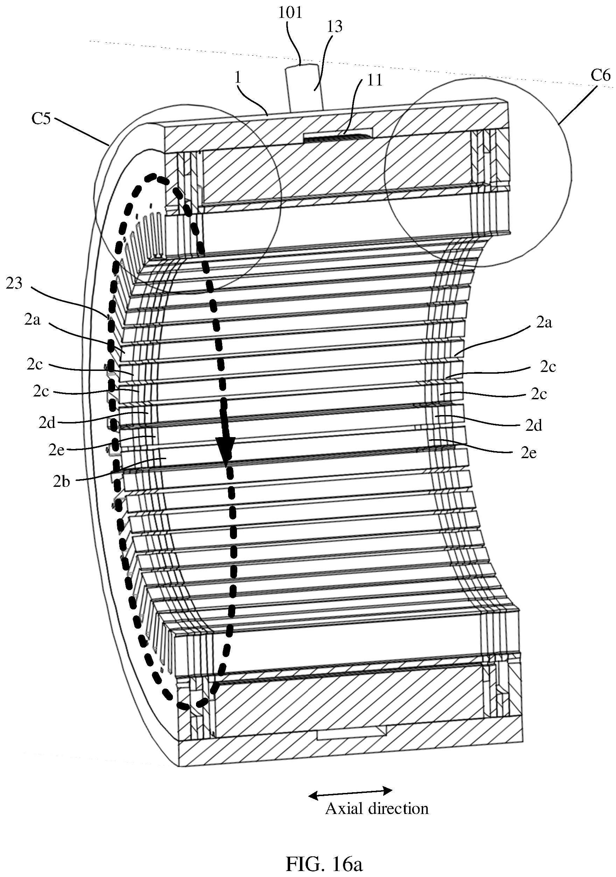

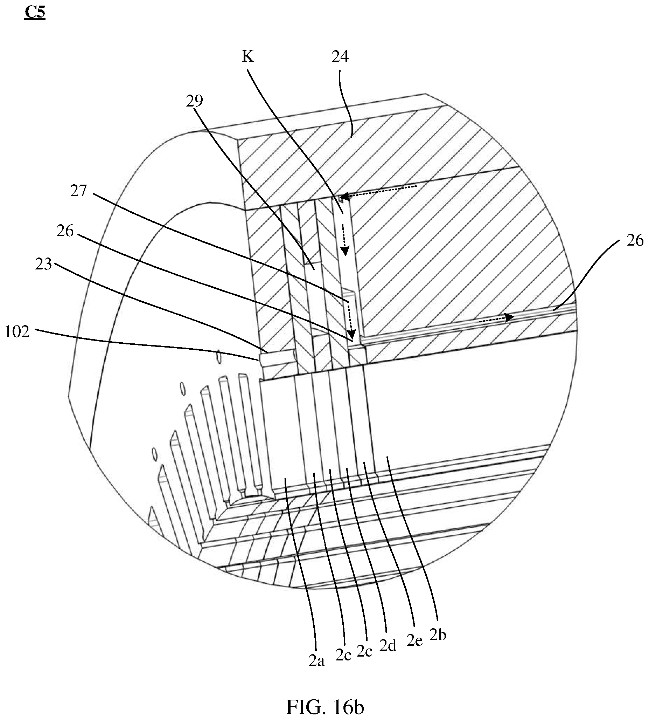

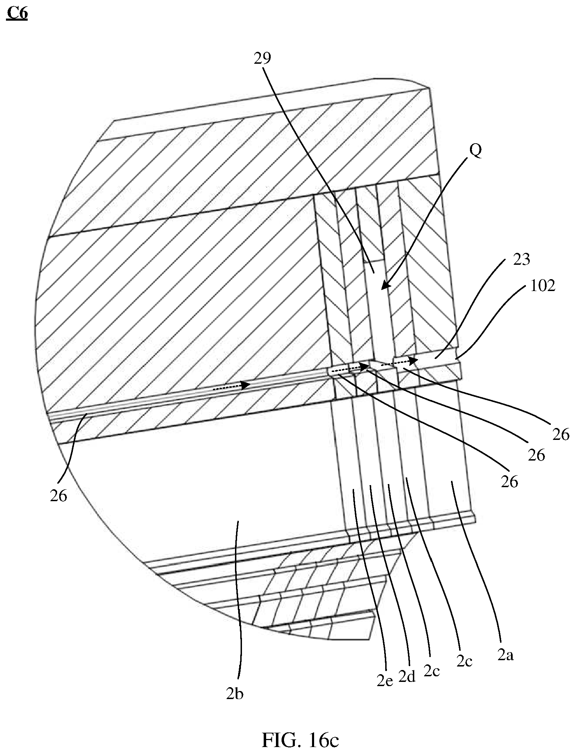

FIG. 16a shows a cross-sectional structure of a stator 10 according to an embodiment of this application. As shown in FIG. 16a, along the axial direction of the stator 10, the fifth lamination 2e, the fourth lamination 2d, the two third lamination 2c, and the first lamination 2a are adjacently arranged at each of two ends of the second lamination 2b. For a structure of each lamination 2, refer to FIG. 12a to FIG. 15d. Along the radial direction of the stator 10, FIG. 16b shows an enlarged view at C5 in FIG. 16a, and FIG. 16c shows an enlarged view at C6 in FIG. 16a.

Refer to both FIG. 16a and FIG. 16b. After a cooling medium is injected into the liquid inlet 101, a circumferential channel 11 of the housing 1 delivers the cooling medium to the plurality of first grooves 24 in the outer circumferential surface of the second lamination 2b. The cooling medium in the first groove 24 flows along the axial direction of the stator 10 to the space K between the second lamination 2b and the fourth lamination 2d, and then flows along the circumferential direction of the stator 10. The cooling medium in the space K enters the first penetrating hole 26 of the second lamination 2b through the third groove 27 and the first penetrating hole 26 of the fifth lamination 2e, and flows to another end of the stator 10 along the axial direction of the stator 10.

Refer to both FIG. 16a and FIG. 16c. The cooling medium in the first penetrating hole 26 of the second lamination 2b flows out, along the axial direction of the stator 10, through the first penetrating hole 26 of the fifth lamination 2e, the first penetrating hole 26 of the fourth lamination 2d, the axial gap Q formed by connecting the third penetrating holes 29 of the two third lamination 2c, and the second penetrating holes 23 of the first lamination 2a to the liquid outlet 102. The cooling medium flowing out from the liquid outlet 102 can be sprayed onto an end winding of a stator winding 20 for cooling the end winding.

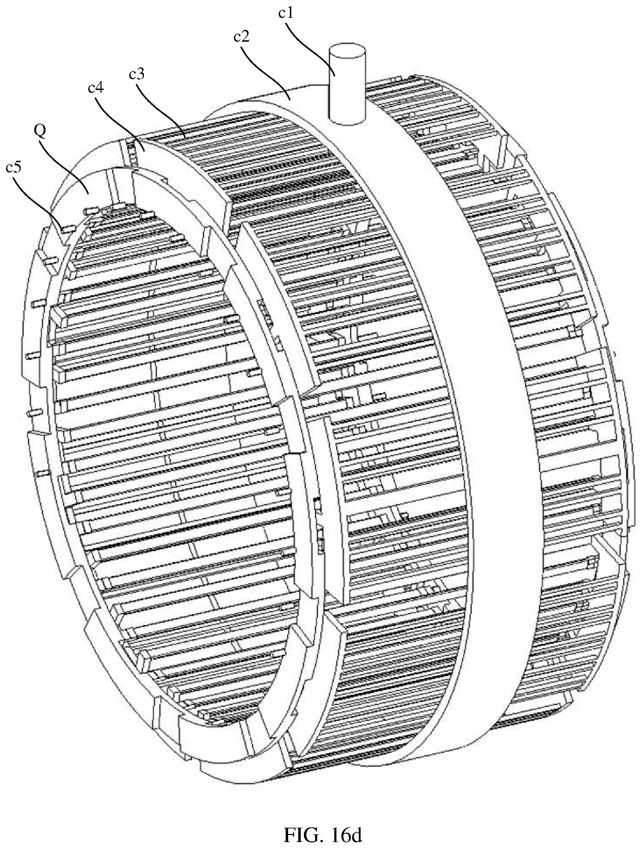

Refer to FIG. 16a to FIG. 16c. FIG. 16d shows an example of a simulated physical structure of a channel formed by the stator 10 for circulation of a cooling medium. As shown in FIG. 16d, a channel c1 is formed by the liquid inlet pipe 13 in the housing 1, and is configured to communicate with the liquid inlet 101 and the circumferential channel 11. A channel c2 is formed by the circumferential channel 11 of the housing 1, is in a ring shape, and is configured to communicate with the liquid inlet pipe 13 and the first grooves 24 in the outer circumferential surfaces of the plurality of second laminations 2b. A channel c3 is formed by the first grooves 24, there are a plurality of first grooves 24, and the plurality of first grooves 24 are spaced apart along the circumferential direction of the stator 10. A channel c4 is formed by the second lamination 2b, the fourth lamination 2d, and the fifth lamination 2e, that is, the space K between the second lamination 2b and the fourth lamination 2d. Each channel c4 communicates with a plurality of channels c3. A channel c5 is formed by the second penetrating hole 23 of the first lamination 2a. The axial gap Q is formed by the third penetrating holes 29 of the two third laminations 2c in a staggered manner, and the axial gap Q is configured to communicate with a plurality of channels c5 and a plurality of channels c4. In this embodiment of this application, the axial gap Q allows a cooling medium to flow along the circumferential direction of the stator 10 to a plurality of liquid outlets 102. In a specific design, a quantity of liquid outlets 102, and a shape and a distribution of the liquid outlet 102 may be adjusted based on a product requirement, to meet liquid cooling requirements of end windings at different angles and in different directions.

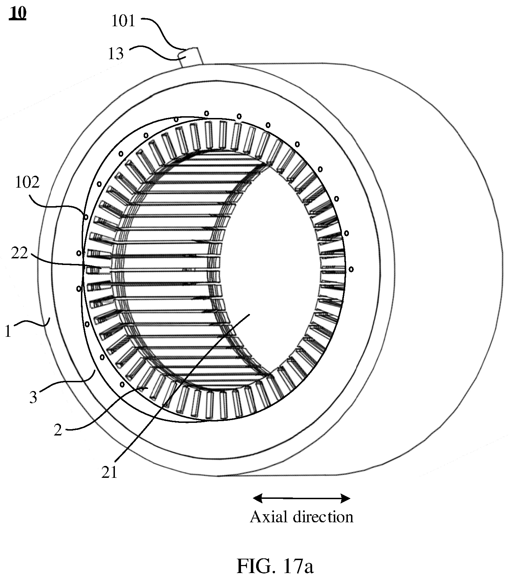

FIG. 17a shows an example of a structure of a stator 10. The stator 10 includes a housing 1, a plurality of laminations 2, and two end plates 3. Along an axial direction of the stator 10, the plurality of laminations 2 are arranged between the two end plates 3, and it may be considered that the end plate 3 is located at an axial end part of the plurality of laminations 2. Along an axial direction of a motor 100, the end plate 3 is adjacently arranged with one lamination 2. Along a circumferential direction of the stator 10, the end plate 3 includes two side faces. One side face of the end plate 3 is away from the lamination 2 along the axial direction of the stator 10, and a surface of the end plate 3 away from the plurality of laminations 2 includes a plurality of liquid outlets 102. The other side face of the end plate 3 faces the lamination 2 along the axial direction of the stator 10. The end plate 3 may be considered as a lamination 2 with a special structure. The housing 1 is disposed outside the plurality of laminations 2 along the circumferential direction of the stator 10. The housing 1 includes a liquid inlet pipe 13 in a hollow cylindrical shape, and a liquid inlet 101 is formed at an end that is of the liquid inlet pipe 13 and that is away from an outer circumferential surface of the housing 1. The end plate 3 may be fastened to the housing 1, or may be fastened to the lamination 2. Along the axial direction of the stator 10, a channel connecting the liquid inlet 101 and the liquid outlet 102 is formed inside the stator 10, to facilitate circulation of a cooling medium.

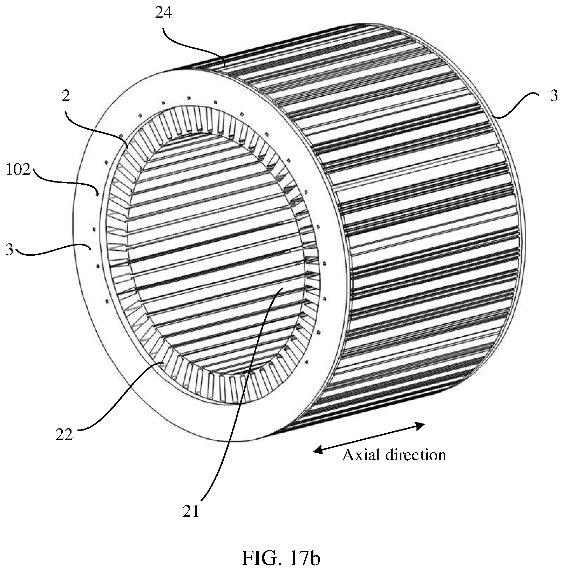

FIG. 17b shows a structure of the stator 10 without the housing 1. The end plate 3 is in a circular ring shape, and is concentrically arranged with the plurality of laminations 2 along the axial direction of the stator 10. Along a radial direction of the stator 10, a distance between an inner wall of the end plate 3 and a central hole 21 is greater than a distance between a bottom of a lamination groove 22 of the lamination 2 and the central hole 21, so that the end plate 3 does not affect winding in the lamination groove 22. Along the circumferential direction of the stator 10, the plurality of liquid outlets 102 in the end plate 3 are distributed within an angle range less than 360°, and a cooling medium is discharged only through the liquid outlet 102 within the angle range.

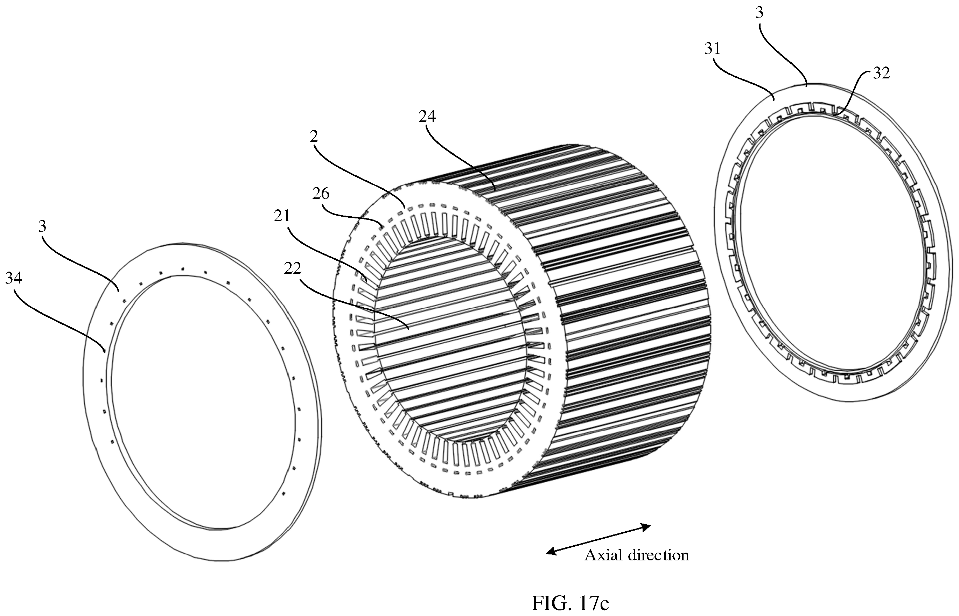

FIG. 17c shows an exploded view of the stator 10 without the housing 1. Along the axial direction of the stator 10, a side that is of the end plate 3 and that faces the lamination 2 includes a circumferential depression 31, and the circumferential depression 31 is connected to an outer circumferential surface of the end plate 3. When the end plate 3 and the lamination 2 are adjacently arranged, space used for communication with a first groove 24 may be formed between the circumferential depression 31 and the lamination 2. In FIG. 17c, there are a plurality of forms of the first groove 24, and along the circumferential direction of the stator 10, a width of the first groove 24 is less than a width of the first depression 31.

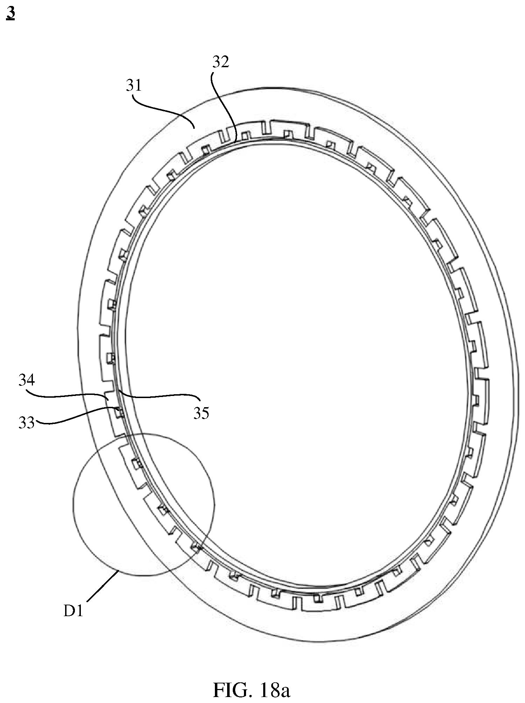

FIG. 18a shows a structure of the end plate 3, and specifically shows a structure that is of the end plate 3 and that faces the lamination 2. As shown in FIG. 18a, for example, the end plate 3 includes a fourth penetrating hole 33, and the fourth penetrating hole 33 extends through the end plate 3 along the axial direction of the stator 10. It should be understood that, when the end plate 3 is considered as one lamination 2, the fourth penetrating hole 33 is equivalent to a second penetrating hole 23 of the lamination 2. One end that is of the fourth penetrating hole 33 and that is away from the lamination 2 forms the liquid outlet 102. The side that is of the end plate 3 and that faces the lamination 2 further includes at least one circumferential groove 32. Each circumferential groove 32 communicates with at least two fourth penetrating holes 33 adjacent to each other along the circumferential direction of the stator 10, and each circumferential groove 32 is configured to communicate with at least two liquid outlets 102. Two adjacent circumferential grooves 32 in the at least one circumferential groove 32 communicate with each other along the circumferential direction of the stator 10. One end of the fourth penetrating hole 33 is connected to the circumferential groove 32, and the other end the fourth penetrating hole 33 is configured to communicate with to the liquid outlet 102. In the end plate 3 shown in FIG. 18a, the circumferential groove 32 is annular, and it may be considered that a plurality of circumferential grooves 32 sequentially communicate with each other along the circumferential direction of the stator 10. The circumferential depression 31 and the circumferential groove 32 are isolated from each other. Along the radial direction of the stator 10, there is a circumferential boss 34 distributed in a serpentine shape between the circumferential depression 31 and the circumferential groove 32, and the circumferential boss 34 isolates the circumferential depression 31 and the circumferential groove 32. A flange 35 is formed between the circumferential groove 32 and an inner edge of the end plate 3, and a surface that is of the flange 35 and that faces the lamination 2 is flush with a surface that is of the circumferential boss 34 and that faces the lamination 2. When the end plate 3 is in contact with the lamination 2, the circumferential boss 34 and the flange 35 abut against the lamination 2.

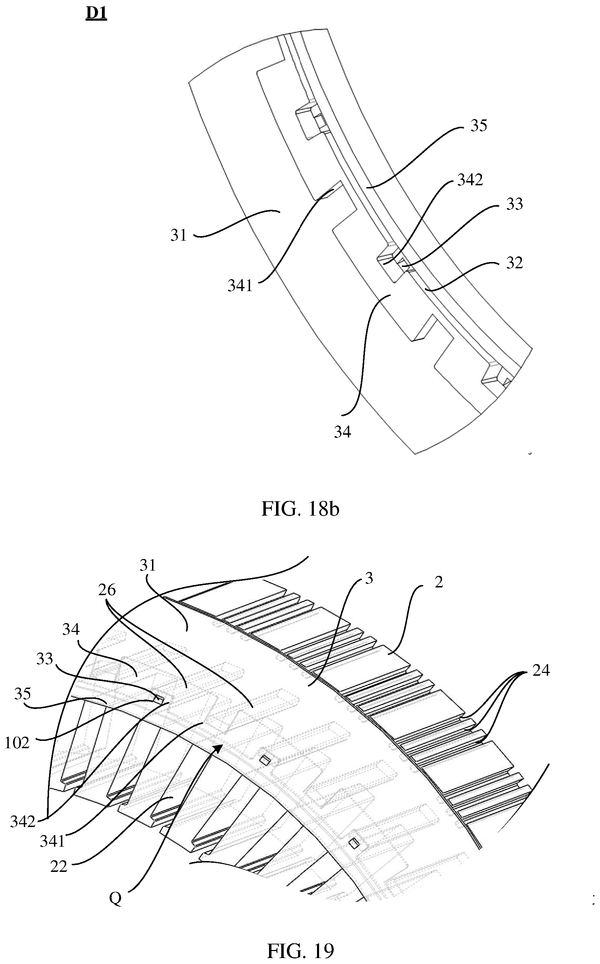

FIG. 18b shows an enlarged view of D1 in FIG. 18a. The circumferential depression 31 and the circumferential groove 32 are distributed along the radial direction of the stator 10, and the circumferential depression 31 and the circumferential groove 32 are isolated from each other by using the circumferential boss 34. As shown in FIG. 18b, along the radial direction of the stator 10, the circumferential boss 34 includes a first groove portion 341 and a second groove portion 342. An opening direction of the first groove portion 341 faces the circumferential depression 31, and an opening direction of the second groove portion 342 faces the circumferential groove 32. Along the axial direction of the stator 10, an orthographic projection of the fourth penetrating hole 33 onto the circumferential boss 34 at least partially overlaps the second groove portion 342, so that the second groove portion 342 can communicate with the fourth penetrating hole 33 along the axial direction of the stator 10. Along the radial direction of the stator 10, a distance between a bottom of the first groove portion 341 and the inner wall of the end plate 3 is greater than a distance between the circumferential groove 32 and the inner wall of the end plate 3, and is less than a distance between a bottom of the second groove portion 342 and the inner wall of the end plate 3.

FIG. 19 shows a perspective view of a partial structure of an end plate 3 and a lamination 2. As shown in FIG. 19, the end plate 3 and the lamination 2 are adjacently arranged along the axial direction of the stator 10. The end plate 3 faces a side of the lamination 2 along the axial direction of the stator 10, the circumferential depression 31 communicates with the first groove 24 of the lamination 2, and a cooling medium in the first groove 24 can enter between the lamination 2 and the end plate 3 through the circumferential depression 31. Along the radial direction of the stator 10, a distance between the bottom of the first groove portion 341 and the central hole 21 of the lamination 2 is less than a distance between the central hole 21 and a side wall that is of a first penetrating hole 26 and that is away from the central hole 21. The circumferential depression 31 may communicate with some first penetrating holes 26 of the lamination 2 through the first groove portion 341, that is, the first groove 24 of the lamination 2 may communicate with the first penetrating hole 26. The first groove 24 is equivalent to an outer cooling channel of the lamination 2, the first penetrating hole 26 is equivalent to an inner cooling channel of the lamination 2, and the circumferential depression 31 is equivalent to connecting the inner and outer cooling channels of the lamination 2. An axial gap Q for circulation of a cooling medium is formed between the circumferential groove 32 and a surface that is of the lamination 2 and that faces the end plate 3. The axial gap Q may communicate with some first penetrating holes 26 of the lamination 2 through the second groove portion 342, and the axial gap Q may further communicate with at least two circumferentially adjacent liquid outlets 102 through the fourth penetrating hole 33. Along the circumferential direction of the stator 10, a size of an opening of each circumferential groove 32 is greater than a sum of diameters of two or more adjacent fourth penetrating holes 33 and a size of a spacing between the two or more adjacent fourth penetrating holes 33.

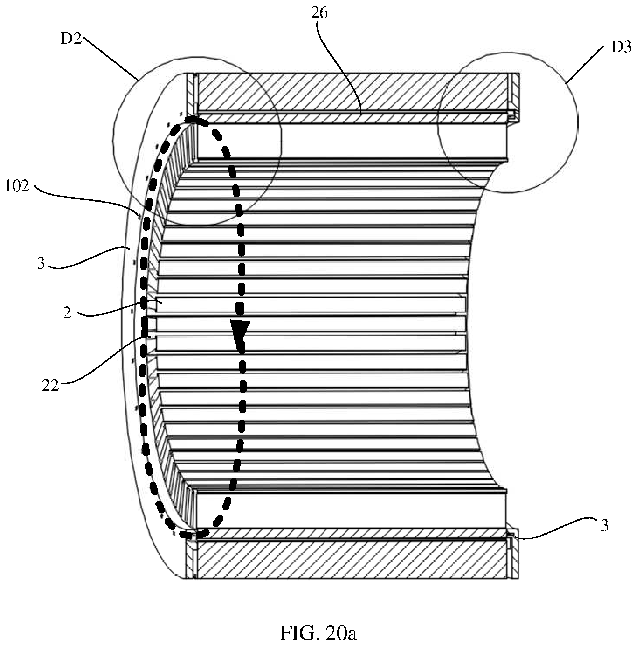

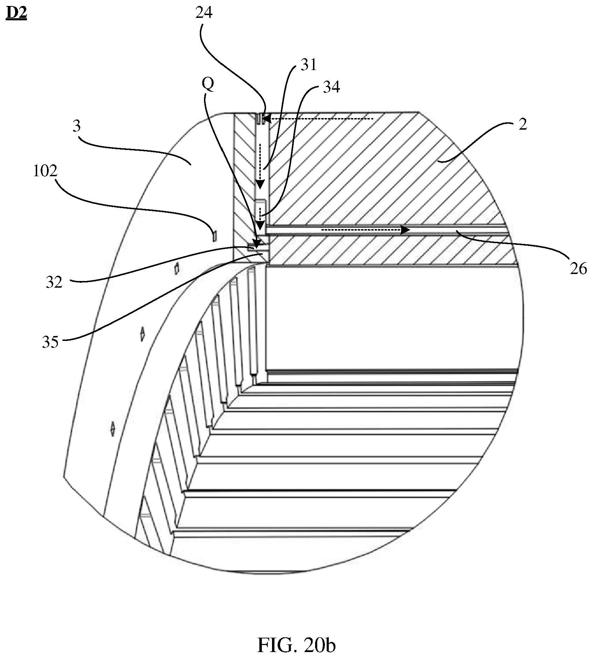

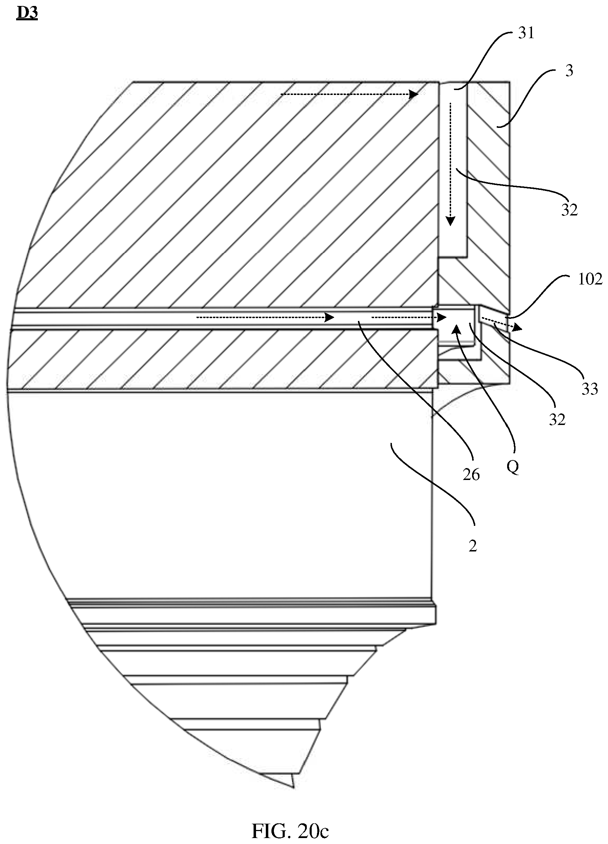

FIG. 20a is a diagram of a cross-sectional structure of the stator 10 without the housing 1. As shown in FIG. 20a, along the circumferential direction of the stator 10, the two end plates 3 are respectively arranged at the two ends of the plurality of laminations 2. One first groove 24 and one first penetrating hole 26 of the second lamination 2b are used as an example. FIG. 20b shows an enlarged view of details at D2 in FIG. 20a. FIG. 20c shows an enlarged view of details at D3 in FIG. 20a.

Refer to both FIG. 20a and FIG. 20b. The lamination 2 and the end plate 3 at D2 in FIG. 20a are adjacently arranged along the axial direction of the stator 10. The end plate 3 faces one side of the lamination 2, and space S in communication with the first groove 24 is formed between the circumferential depression 31 and the lamination 2. The space S communicates with the first penetrating hole 26 of the lamination 2 through the first groove portion 341. As shown by an arrow in FIG. 20b, after a cooling medium is injected into the first groove 24, the cooling medium flows along the axial direction of the stator 10 to the space S between the second lamination 2b and the end cover 3 and then flows along the circumferential direction of the stator 10. The cooling medium in the space K enters the first penetrating hole 26 of the second lamination 2b through the first groove portion 341, so that the first groove 24 of the second lamination 2b communicates with the first penetrating hole 26.

Refer to both FIG. 20a and FIG. 20c. On another side of the first penetrating hole 26 of the second lamination 2b, the first penetrating hole 26 communicates with the circumferential groove 32 of the end plate 3, and the circumferential groove 32 communicates with the fourth penetrating hole 33. The cooling medium in the first penetrating hole 26 may flow to the end plate 3 along an arrow direction, and flow through the circumferential groove 32 and the fourth penetrating hole 33 to be sprayed out from the liquid outlet 102. For example, the fourth penetrating hole 33 herein is inclined and tilts toward an axial center of the stator 10, so that the cooling medium can be sprayed onto an end winding after being sprayed.

In the foregoing embodiment, along the circumferential direction of the stator 10, the first penetrating hole 26 in communication with the circumferential groove 32 of the end part 3 and the first penetrating hole 26 in communication with the circumferential depression 31 are alternately arranged. In other words, in any two first penetrating holes 26 adjacent to each other along the circumferential direction of the stator 10, one penetrating hole 26 can communicate with the first groove 24, and the other first penetrating hole 26 cannot communicate with the first groove 24. When the two end plates 3 are arranged, the two end plates 3 may be arranged in a staggered manner along the circumferential direction of the stator 10 to form a circulation channel shown in 14a. Along the circumferential direction of the stator 10, U-shaped circulation channels corresponding to any two adjacent first penetrating holes 26 face away from each other along the axial direction of the stator 10.

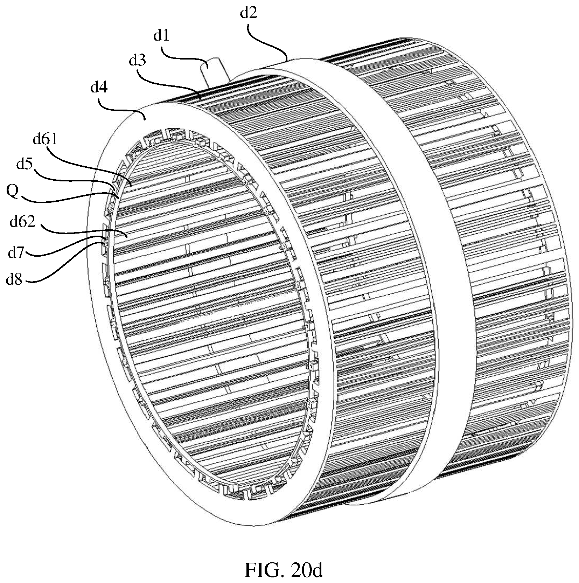

Refer to FIG. 20a to FIG. 20c. FIG. 20d shows an example of a simulated physical structure of a channel formed by the stator 10 for circulation of a cooling medium. As shown in FIG. 20d, a channel d1 is formed by the liquid inlet pipe 13 in the housing 1, and is configured to communicate with the liquid inlet 101 and the circumferential channel 11. A channel d2 is formed by a circumferential channel 11 of the housing 1, is in a ring shape, and is configured to communicate with the liquid inlet pipe 13 and first grooves 24 in outer circumferential surfaces of a plurality of second laminations 2. A channel d3 is formed by the first grooves 24, there are a plurality of first grooves 24, and the plurality of first grooves 24 are spaced apart along the circumferential direction of the stator 10. A channel d4 is formed by the first depression 31 of the end plate 3, an inner wall of the housing 1, and the lamination 2, that is, the space S between the lamination 2 and the end plate 3, and the channel d4 communicates with a plurality of channels d3. A channel d5 is formed by the first groove portion 341 of the circumferential boss 34 of the end cover 3, and a channel d7 is formed by the second groove portion 342 of the circumferential boss 34 of the end cover 3. The plurality of first penetrating holes 26 of the lamination 2 form some channels d61 and some other channels d62. The channel d5 communicates with the channel d4 and some channels d61, and the channel d7 communicates with the channel d4 and some other channels d62. The axial gap Q is formed by the circumferential groove 32 of the end plate 3 and the lamination 2, and the axial gap Q is configured to communicate with a plurality of channels d61 and a plurality of channels d7. A channel d8 is formed by the fourth penetrating hole 33 of the end plate 3, and the channel d8 is configured to communicate with the liquid outlet 102 and the axial gap Q. In this embodiment of this application, the axial gap Q allows a cooling medium to flow along the circumferential direction of the stator 10 to a plurality of liquid outlets 102. In a specific design, a quantity of liquid outlets 102, and a shape and a distribution of the liquid outlet 102 may be adjusted based on a product requirement, to meet liquid cooling requirements of end windings at different angles and in different directions.

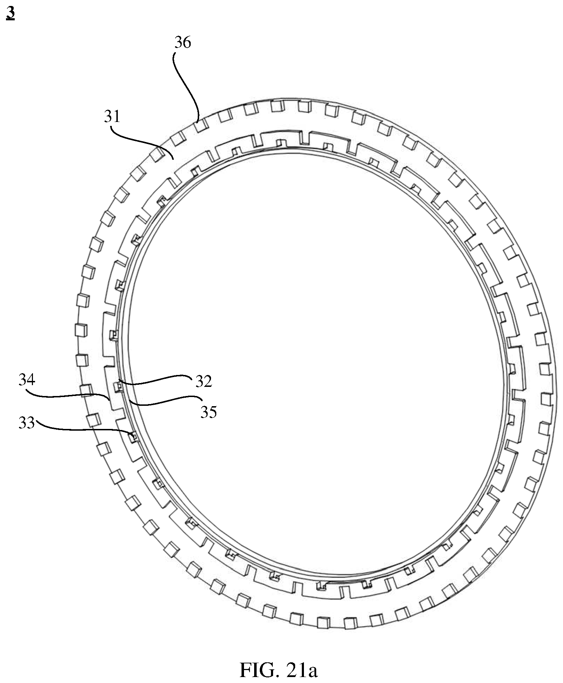

In an embodiment, the end plate 3 in the stator 10 provided in this embodiment of this application may be further implemented in another manner. As shown in FIG. 21a, the side that is of the end plate 3 and that faces the lamination 2 further includes a plurality of bumps 36. The plurality of bumps 36 are spaced apart along the circumferential direction of the stator 10. Along the radial direction of the stator 10, each bump 36 is located in the circumferential depression 31 and is isolated from the circumferential boss 34.

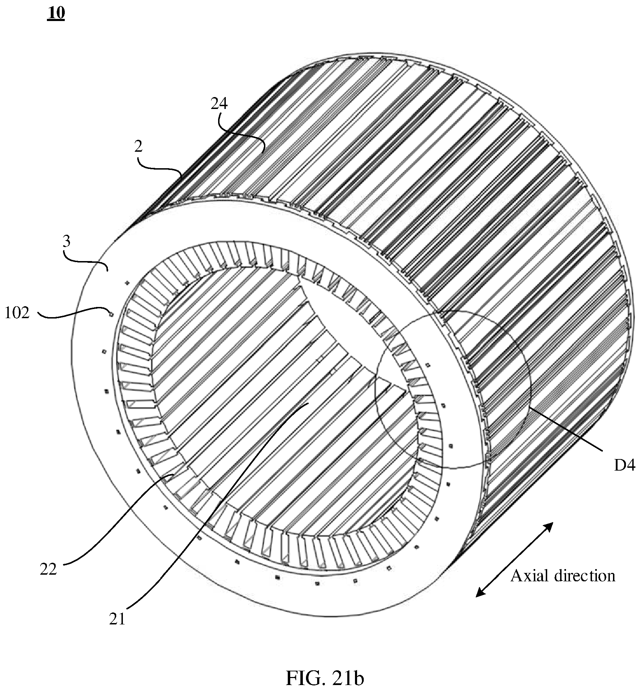

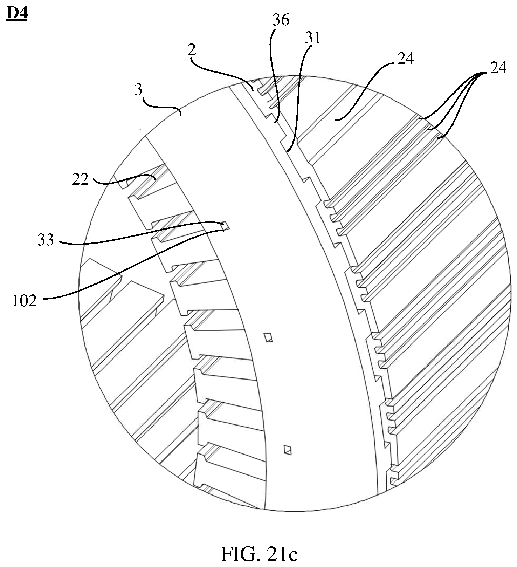

FIG. 21b shows a structure of a stator 10 with the end part 3 shown in FIG. 21a, and the housing 1 is hidden herein. FIG. 21c shows an enlarged view of details at D4 in FIG. 21b. Refer to both FIG. 21b and FIG. 21c. When the end plate 3 and the lamination 2 are arranged along the axial direction of the stator 10, the bump 36 on the side that is of the end part 3 and that faces the lamination 2 is in contact with a side that is of the lamination 2 and that faces the end plate 3. To enable the first groove 24 of the lamination 2 to communicate with the first depression 31, along the circumferential direction of the stator 10, a gap between any two bosses 36 corresponds to at least one first groove 24 along the axial direction of the stator 10.

In conclusion, the stator 10 of the motor 100 provided in embodiments of this application does not need a structure of an oil spraying ring, and the cooling medium can be sprayed onto the end winding at the axial end part of the stator 10 through the cooling channel of the stator 10. The axial gap Q is provided, so that the cooling medium can flow along the circumferential direction of the stator 10 and be sprayed out through at least two adjacent liquid outlets 102. The axial gap Q is close to the axial end part of the stator 10, and distribution of the liquid outlets 102 is set, so that non-uniform oil spraying can be implemented at the end part of the stator 10, thereby implementing efficient cooling for the end winding and achieving good liquid cooling and heat dissipation effect. In some embodiments, compared with conventional oil-cooled heat dissipation, in this embodiment of this application, the stator 10 of the motor 100 has a lower temperature and better heat dissipation effect. The oil spraying ring is removed from the structure, to further reduce costs of the motor 100, and achieve effect of reducing costs and improving efficiency.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. A motor with stator liquid-outlet for winding cooling, wherein a stator of the motor comprises an axial gap, two end plates, and a plurality of laminations; and
along an axial direction of the motor, the plurality of laminations are arranged between the two end plates, one end plate comprises a plurality of liquid outlets, the plurality of liquid outlets are spaced apart along a circumferential direction of the motor, the axial gap is configured to communicate with at least two adjacent liquid outlets, and the axial gap comprises:
an axial gap between two laminations, wherein at least one other lamination is arranged between the two laminations along the axial direction of the motor; or
an axial gap between one lamination and the end plate, wherein the end plate and the one lamination are adjacently arranged along the axial direction of the motor.

2. The motor according to claim 1, wherein one end plate is a lamination, and one of the two laminations is arranged between the end plate and the other of the two laminations;
the one lamination comprises a plurality of first grooves or a plurality of first penetrating holes, and the plurality of first grooves or the plurality of first penetrating holes are spaced apart along the circumferential direction of the motor; and
the other lamination comprises a plurality of second penetrating holes, and the plurality of second penetrating holes are spaced apart along the circumferential direction of the motor.

3. The motor according to claim 2, wherein a quantity of first grooves of the one lamination or a quantity of first penetrating holes of the one lamination is greater than a quantity of second penetrating holes of the other lamination.

4. The motor according to any one of claims 1 to 3, wherein an outer diameter of the at least one other lamination is less than outer diameters of the two laminations.

5. The motor according to any one of claims 1 to 4, wherein an outer circumferential surface of the at least one other lamination comprises a plurality of second grooves, and the plurality of second grooves are spaced apart along the circumferential direction of the motor;
along the circumferential direction of the motor, an opening of each second groove is greater than an opening of each first groove; and
along a radial direction of the motor, a depth of each second groove is greater than a depth of each first groove.

6. The motor according to claim 5, wherein along the circumferential direction of the motor, a size of the opening of each second groove is greater than a sum of sizes of openings of two or more adjacent first grooves and a spacing between the two or more adjacent first grooves, and the quantity of first grooves of the one lamination is greater than a quantity of second grooves of each of the at least one other lamination.

7. The motor according to claim 5, wherein the motor comprises a housing, the housing is configured to accommodate the stator core, an inner wall of the housing comprises two radial grooves and the liquid inlet, and a bottom of one radial groove is connected to the liquid inlet; and
along the axial direction of the motor, a length of an opening of the one radial groove along the axial direction of the motor is greater than a length of an opening of the other radial groove.

8. The motor according to claim 7, wherein along the axial direction of the motor, the length of the opening of the other radial groove is less than or equal to a thickness of one lamination, and the length of the opening of the one radial groove is greater than a thickness of one or more laminations.

9. The motor according to any one of claims 1 to 3, wherein each of the at least one other lamination comprises a plurality of third penetrating holes, and the plurality of third penetrating holes are spaced apart along the circumferential direction of the motor; and
along the circumferential direction of the motor, a diameter of each third penetrating hole is greater than a diameter of each first penetrating hole and a diameter of each second penetrating hole.

10. The motor according to claim 9, wherein along the circumferential direction of the motor, the diameter of each third penetrating hole is greater than a sum of diameters of two or more adjacent second penetrating holes and a size of a spacing between the two or more adjacent second penetrating holes, and a quantity of the plurality of third penetrating holes is less than a quantity of the plurality of second penetrating holes.

11. The motor according to claim 1, wherein the stator comprises one end plate, along the axial direction of the motor, the end plate and the one lamination are adjacently arranged, and the end plate comprises two side faces;
one side face is away from the one lamination along the axial direction of the motor, and the one side face comprises a plurality of liquid outlets; and
the other side face faces the one lamination along the axial direction of the motor, and the other side face comprises at least one circumferential groove.

12. The motor according to claim 11, wherein a depression direction of each circumferential groove is away from the one lamination along the axial direction of the motor, and each circumferential groove is configured to communicate with at least two liquid outlets.

13. The motor according to claim 11, wherein along the circumferential direction of the motor, a size of an opening of each circumferential groove is greater than a sum of diameters of two or more adjacent second penetrating holes and a size of a spacing between the two or more adjacent second penetrating holes; or
along the circumferential direction of the motor, two adjacent circumferential grooves in the at least one circumferential groove communicate with each other.

14. A powertrain, comprising one of a reducer or a transmission and the motor according to any one of claims 1 to 13, wherein an output shaft of the motor is in transmission connection to an input shaft of the reducer or the transmission.

15. An electric vehicle, comprising a wheel, a transmission mechanism, and the powertrain according to claim 14, wherein the powertrain drives the wheel through the transmission mechanism.
